(19) Europäisches Patentamt
European Patent Office
Office européen des brevets

(11) Veröffentlichungsnummer: **0 019 584**
**B1**

# (12) EUROPÄISCHE PATENTSCHRIFT

(45) Veröffentlichungstag der Patentschrift: **14.11.84**

(51) Int. Cl.³: **C 08 F 2/38,** B 01 F 17/52, A 62 D 1/00

(21) Anmeldenummer: **80810142.2**

(22) Anmeldetag: **28.04.80**

(54) **Oligomere mit Merkaptogruppen enthaltenden Perfluoralkylendgruppen, Verfahren zu deren Herstellung sowie deren Verwendung als oberflächenaktive Verbindungen und als Zusatzstoffe in Feuerlöschzusammensetzungen.**

(30) Priorität: **03.05.79 US 35375**
**13.03.80 US 129872**

(43) Veröffentlichungstag der Anmeldung: **26.11.80 Patentblatt 80/24**

(45) Bekanntmachung des Hinweises auf die Patenterteilung: **14.11.84 Patentblatt 84/46**

(84) Benannte Vertragsstaaten: **BE CH DE FR GB IT LI NL SE**

(56) Entgegenhaltungen:
**FR - A - 2 165 877**
**US - A - 4 089 804**

(73) Patentinhaber: **CIBA-GEIGY AG, Postfach, CH-4002 Basel (CH)**

(72) Erfinder: **Kleiner, Eduard Karl, Hemlock Hill Road, Pound Ridge, New York 10576 (US)**
Erfinder: **Cooke, Thomas W., R.D. 3, Red Hill Road, Mahopac, New York 10541 (US)**
Erfinder: **Falk, Robert A., 35 Glenside Drive, New City, New York 10956 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft eine neue Klasse von Oligomeren mit Perfluoralkylsulfidendgruppen, deren Hauptkette 8 bis 1000 Kohlenstoffatome neben denen des Perfluoralkydsulfidteils aufweist, wobei die Hauptkette der Oligomeren aus hydrophilen Monomereinheiten oder Gemischen von hydrophilen und hydrophoben Monomereinheiten aufgebaut ist, ein Verfahren zu deren Herstellung, deren Verwendung als oberflächenaktive Verbindungen sowie deren Einarbeitung in Proteinhydrolysatzusammensetzungen für Feuerlöschschäume.

Proteinfeuerlöschschäume werden von J.M. Perri («Fire Fighting Foams [Feuerlöschschäume]» in Foams; Theory and Industrial Applications [Schäume, Theorie und technische Anwendungen], herausgegeben von J.J. Bikerman, Reinhold Publishing Corp., N.Y. 1953, S. 189–242) und auch von N.O. Clark (Spec. Report Nr. 6, D.S.I.R., H.M. Stationery Office, London 1947) beschrieben. Diese bestehen aus wässrigen Feuerlöschschäumen auf Proteingrundlagen wie tierischen Proteinen, insbesondere Keratinen, Albuminen und Globulinen, die sich von Horn, Hufen, Haaren, Federn, Blut oder Fischschuppen ableiten, sowie pflanzlichen Proteinen aus Sojabohnenmehl, Erbsenmehl und Maismehl.

Zusätzlich können solche Zusammensetzungen als Stabilisatoren Salze von Metallen wechselnder Wertigkeit, Lösungsmittel, um ihnen eine Leistungsfähigkeit bei niedriger Temperatur zu verleihen, Schutzkolloide und Saponine enthalten.

Proteinschäume wurden als Feuerlöschmittel für solche, in der Regel gefährliche Fälle entwikkelt, wie sie etwa bei grossen Mengen feuergefährlicher Flüssigkeiten, also z.B. in Raffinerien, Tanklagern und bei der Lagerung von Brennstoffen mit niedrigem Flammpunkt, wie Benzin, vorliegen können. Dabei besteht stets die Gefahr, dass längere vorhergehende Brände heisse Zonen in tiefliegenden Brennstoffschichten aufbauen können, und unter solchen Umständen werden Normalproteinschäume bei jeder Art des Aufbringens schnell mit Brennstoff verunreinigt, brennen selbst ab und besitzen daher eine beschränkte Wirksamkeit.

Die Wirksamkeit solchen proteinhydrolysatartigen Feuerlöschschaums wurde durch den Zusatz von fluorierten Tensiden, insbesondere Perfluoralkylgruppen enthaltenden Tensiden, (nachfolgend $R_f$-Tenside genannt), wie in der U.S. Patentschrift 3 475 333 und der britischen Patentschrift 1 245 124 beschrieben, verbessert. Diese sogenannte Fluorproteinschaumzusammensetzungen werden vor allem als 3%- oder 6%-Dosierkonzentrate gegen Brände in hochgefährlichen Situationen eingesetzt, wo es sich um die Massenlagerung von feuergefährlichen Flüssigkeiten handelt. Die grösseren Öl- und chemischen Gesellschaften haben diese als überlegenes Schaumlöschmittel für die Öl- und petrochemische Industrie akzeptiert. Sie bieten ferner optimale Schaumeigenschaften zur Beherrschung von Löschung von Bränden bei Flugzeugabstürzen und zur allgemeinen Anwendung gegen Brände ausgelaufener Kohlenwasserstoffe.

Die $R_f$-Tenside der oben erwähnten Patentschriften werden zur Verbesserung der Eigenschaften proteinartiger Feuerlöschschäume darin eingearbeitet, wobei sie diesen bessere Schaumbeweglichkeit, verkürzte Löschzeiten und verringerte Empfindlichkeit gegen Kohlenwasserstoffaufnahme verleihen.

Die in der U.S. Patentschrift 3 475 333 und der britischen Patentschrift 1 245 124 offenbarten $R_f$-Tenside unterscheiden sich in ihrer Struktur wesentlich von den Oligomeren der vorliegenden Erfindung. Während ferner wie in den oben erwähnten Patentschriften offenbarte $R_f$-Tenside enthaltendä Proteinschäume zwar vorteilhaft sind, indem sie die Löschzeiten bei der Bekämpfung von Kohlenwasserstoffbränden gegenüber Proteinschäumen ohne solche Tenside verkürzen, neigen die $R_f$-Tenside dazu, die Schaumausbreitung sowie die Schaumablaufzeit aus dem Proteinschaum zu verringern, was als unerwünschte Nebenwirkungen angesehen wird, da die Fläche, die mit einer gegebenen Menge Proteinschaumkonzentrat bedeckt werden kann, verkleinert wird und da ein schnellerer Schaumablauf den Wiederentflammungswiderstand verringert.

Gegenstand vorliegender Erfindung sind neuartige Oligomere mit Fluoralkylendgruppen, welche sich von Perfluoralkylmerkaptanen und hydrophilen und hydrophoben Monomeren, die unter radikalischen Bedingungen polymerisiert werden, ableiten, sowie die Verwendung solcher Oligomerer als Zusatzstoffe zu proteinschaumartigen Feuerlöschzusammensetzungen und als oberflächenaktive Verbindungen (Herabsetzung der Oberflächenspannung) für wässrige Systeme.

Ganz allgemein lassen sich die neuartigen Oligomeren durch nachfolgende Formel

(1) $$R_f{-}E{-}S{-}[M_1]_x{-}[M_2]_y{-}H$$

worin $R_f$ geradkettiges oder verzweigtes Perfluoralkyl mit 4 bis 18 Kohlenstoffatomen, Perfluoralkyloxyalkylen mit 5 bis 19 Kohlenstoffatomen oder Gemische davon darstellt, E geradkettiges oder verzweigtes Alkylen mit 1 bis 12 Kohlenstoffatomen, $-CON(R')-E'-$, $-SO_2N(R')-E'-$, $-E''-CON(R')-E'-$, $-E''-S-E'-$, $-E''-N(R')-E'-$ oder $-E''-SO_2N(R')-E'-$ bedeutet, wobei R' für Wasserstoff oder Alkyl mit 1 bis 6 Kohlenstoffatomen, E' für Alkylen mit 2 bis 8 Kohlenstoffatomen und E'' für Alkylen mit 1 bis 4 Kohlenstoffatomen stehen, $-[M_1]-$ eine von einem hydrophilen Vinylmonomeren abgeleitete hydrophile Monomereinheit und $-[M_2]-$ eine von einem hydrophoben Vinylmonomeren abgeleitete hydrophobe Monomereinheit darstellen, die Summe von x und y 4 bis etwa 500 beträgt, $\frac{x}{x+y}$ zwischen 1 und 0,5 liegt, sowie x eine ganze Zahl von 4 bis etwa 500 und y null oder eine ganze Zahl bis 250 sind, beschreiben. Vorzugsweise beträgt die Summe von x und y 10 bis etwa 200, und y ist null.

Es versteht sich, dass die Formel nicht die eigentliche Reihenfolge der Oligomereinheiten abbilden soll, da die Einheiten in dem neuartigen Oligomeren statistisch verteilt sein können. Ferner versteht es sich, dass die Monomeren von denen sich die $-[M_1]-$ und $-[M_2]-$ Einheiten ableiten, an sich bekannt sind.

Die neuartigen, erfindungsgemässen Oligomeren werden dadurch synthetisiert, dass man ein oder mehrere hydrophile Monomere des Typs $M_1$, gegebenenfalls mit einem oder mehreren hydrophoben Monomeren des Typs $M_2$, in Gegenwart eines $R_f$-Merkaptans der Formel

(2) $R_f-E-SH$

worin $R_f$ und E die oben angegebene Bedeutung haben, polymerisiert.

$R_f$-Merkaptane der Formel (2) sind unter anderem in den U-S-Patentschriften 2 894 991, 2 961 470, 2 965 677, 3 088 849, 3 172 910, 3 554 663, 3 655 732, 3 686 283, 3 883 596, 3 886 201, 3 935 277 und 3 514 487 beschrieben.

Andernfalls lassen sich geeignete $R_f$-Merkaptane leicht durch Umsetzung eines $R_f$-Säurehalogenids, z.B. $R_fSO_2Cl$ oder $R_fCOCl$, mit einem Aminomerkaptan, z.B. $H-N(R')-E'-SH$ in einem inerten Lösungsmittel herstellen.

Besonders bevorzugte Merkaptane sind solche der Formel $R_f(C_nH_{2n})SH$, worin n 1 bis 12 ist, wie $R_fCH_2CH_2SH$ ($R_f = C_6F_{13}-C_{12}F_{25}$) sowie weitere Merkaptane der Formeln

$C_8F_{17}CH_2CH_2SCH_2CH_2SH$
$C_8F_{17}CH_2CH_2SCH_2CH_2CH_2SH$
$C_8F_{17}CH_2CH_2OCH_2CH_2SH$
$C_8F_{17}CH_2CH_2OCH_2CH_2CH_2SH$
$C_8F_{17}CH_2CH_2N(CH_3)CH_2CH_2CH_2SH$
$(CH_3)_2CF(CF_2)_8CH_2CH_2SH$
$C_8F_{17}SO_2NHCH_2CH_2SH$
$C_6F_{17}SO_2N(CH_3)CH_2CH_2SH$
$C_7F_{15}CONHCH_2CH_2SH$
$C_{10}F_{19}OC_6H_4SH$
$C_6F_{17}CH_2CH_2SO_2NHCH_2CH_2SH$
$C_8F_{17}CH_2CH_2SO_2N(CH_3)CH_2CH_2SH$.

Hydrophile Monomere des Typs $M_1$, die mindestens eine hydrophile Gruppe enthalten, sind an sich bekannt und in vielen Fällen im Handel erhältlich, wie Acryl- und Methacrylsäure und deren Salze sowie hydrophile Gruppen enthaltende Derivate, wie deren Hydroxyalkylester, z.B. die 2-Hydroxyäthyl-, 3-Hydroxypropyl-, 2-Hydroxypropyl- oder 2,3-Dihydroxypropylester und auch äthoxylierte und polyäthoxylierte Hydroxyalkylester wie Ester von Alkoholen der Formel

(3) $HO-G_mH_{2m}-O-(CH_2-CH_2-O)_n-R_1$

worin R für Wasserstoff oder Methyl, m für 2 bis 5 und n für 1 bis 20 stehen, oder Ester analoger Alkohole, worin die Äthylenoxideinheiten teilweise durch Propylenoxideinheiten ersetzt sind. Weitere geeignete Ester sind Dialkylaminoalkylacrylate und -methacrylate, wie die 2-(Dimethylamino)-äthyl-, 2-(Diäthylamino)-äthyl- und 3-(Dimethylamino)-2-hydroxypropylester. Eine weitere Klasse von hydrophilen Monomeren umfasst Acrylamid und Methacrylamid sowie durch Hydroxyniederalkyl-, Oxaniederalkyl- oder Dialkylaminoniederalkylgruppen substituierte Amide wie N-(Hydroxymethyl)-acrylamid und -methacrylamid, N-(3-Hydroxypropyl)-acrylamid, N-(2-Hydroxyäthyl)-methacrylamid, N-(1,1-Dimethyl-3-oxabutyl)-acrylamid und N-[1,1-Dimethyl-2-(hydroxymethyl)-3-oxabutyl)]-acrylamid; als hydrophile Monomere sind ferner Hydrazinderivate von Interesse, wie Trialkylamin-methacrylimide, z.B. Trimethylamin-methacrylimid und Dimethyl-(2-hydroxypropyl)-amin-methacrylimid und die entsprechenden Acrylsäurederivate; einfach ungesättigte Sulfonsäuren und deren Salze, wie Natriumäthylensulfonat, Natriumstyrolsulfonat und 2-Acrylamido-2-methylpropansulfonsäure; N-[2-(Dimethylamino)-äthyl]-acrylamid und -methacrylamid, N-[3-(Dimethylamino)-2-hydroxypropyl]-methacrylamid, oder einfach ungesättigte Derivate von heterocyclischen stickstoffhaltigen Monomeren wie N-Vinyl-pyrrol, N-Vinyl-succinimid, 1-Vinyl-2-pyrrolidon, 1-Vinyl-imidazol, 1-Vinyl-indol, 2-Vinyl-imidazol, 4(5)-Vinyl-imidazol, 2-Vinyl-1-methyl-imidazol, 5-Vinyl-pyrazolin, 3-Methyl-5-isopropenyl- oder 5-methylenhydantoin, 3-Vinyl-2-oxazolidon, 3-Methacrylyl-2-oxazolidon, 3-Methacrylyl-5-methyl-2-oxazolidon, 3-Vinyl-5-methyl-2-oxazolidon, 2- und 4-Vinyl-pyridin, 5-Vinyl-2-methyl-pyridin, 2-Vinyl-pyridin-1-oxid, 3-Isopropenyl-pyridin, 2- und 4-Vinyl-piperidin, 2- und 4-Vinyl-chinolin, 2,4-Dimethyl-6-vinyl-s-triazin, 4-Acrylyl-morpholin sowie die quartärisierten Derivate der obigen Pyridine.

Die oben angeführten hydrophilen Monomeren des Typs $M_1$ lassen sich allein oder miteinander kombiniert sowie mit geeigneten hydrophoben Monomeren des Typs $M_2$ kombiniert einsetzen.

Hydrophile Monomere des Typs $M_1$, die zur Polymerisation ein Comonomer erfordern, sind die Maleinate, Fumarate und Vinyläther; beispielsweise sind die folgenden Monomerkombinationen geeignet: Die-(hydroxyalkyl)-maleinate wie Di-(2-hydroxyäthyl)-maleinat und äthoxylierte Hydroxyalkyl-maleinate, Hydroxyalkyl-monomaleinate wie 2-Hydroxyäthyl-monomaleinat und hydroxylierte Hydroxyalkyl-monomaleinate mit Vinyläthern, Vinylestern, Styrol oder allgemein jedem Monomeren, das sich leicht mit Maleinaten oder Fumaraten copolymerisieren lässt; Hydroxyalkylvinyläther wie 2-Hydroxyäthyl-vinyläther und 4-Hydroxybutylvinyläther mit Maleinaten, Fumaraten oder allgemein allen Monomeren, die sich mit Vinyläthern leicht copolymerisieren lassen.

Besonders wertvoll als hydrophile Monomere des Typs $M_1$ sind Acrylsäure, Methacrylsäure, Acrylamid, Diaceton-acrylamid, Acrylamidopropansulfonsäure und deren Salze sowie Hydroxyäthyl-methacrylat.

Hydrophobe Monomere des Typs $M_2$, die mit hydrophilen Monomeren des Typs $M_1$ copolymerisieren, sind an sich bekannt und umfassen Acrylate, Methacrylate, Maleinate, Fumarate und Itaconate mit einem oder mehreren Kohlenstoffatomen in der Estergruppe, wie Methyl, Äthyl, Propyl, Isopropyl, Butyl, Hexyl, Octyl, Decyl, Dodecyl, 2-Äthylhexyl, Octadecyl, Cyclohexyl, Phenyl, Benzyl und 2-Äthoxyäthyl;

Vinylester mit 1 bis 18 Kohlenstoffatomen in der Estergruppe, wie Vinylacetat, -butyrat, -laurat, -stearat, -2-äthyl-hexanoat und -benzoat; Vinylchloracetat und Isopropenyl-acetat sowie Vinylcarbonatderivate;

Styrol und substituierte Styrole wie o- und p-Methyl-, 3,4-Dimethyl-, 3,4-Diäthyl- und p-Chlorstyrol; α-Olefine, welche substituierte, sowohl geradkettige als auch verzweigte α-Olefine mit bis 18 Kohlenstoffatomen in der Seitenkette umfassen, einschliesslich Äthylen, Propylen und Butylen;

Methylvinyläther, Isopropylvinyläther, Isobutylvinyläther, 2-Methoxyäthylvinyläther, n-Propylvinyläther, t-Butylvinyläther, Isoamylvinyläther, n-Hexylvinyläther, 2-Äthylbutylvinyläther, Diisopropylmethylvinyläther, 1-Methylheptylvinyläther, n-Decylvinyläther, n-Tetradecylvinyläther und n-Octadecylvinyläther;

Vinylchlorid, Vinylidenchlorid, Vinylfluorid, Vinylidenfluorid, Acrylnitril, Methacrylnitril, Tetrafluoräthylen, Trifluorchloräthylen und Hexafluorpropylen;

Diene, insbesondere 1,3-Butadien, Isopren und Chloropren, 2-Fluorbutadien, 1,1,3-Trifluorbutadien, 1,1,2,3-Tetrafluorbutadien, 1,1,2-Trifluor-3,4-dichlorbutadien sowie Tri- und Pentafluorbutadien und Isopren.

Es ist dem Fachmann wohlbekannt, dass Merkaptane bei der Radikalpolymerisations- und -copolymerisationsreaktion als sogenannte Kettenüberträger wirken. Die zuvor angeführten hydrophilen Monomeren des Typs $M_1$ und hydrophoben Monomeren des Typs $M_2$ lassen sich in Gegenwart eines Radikalinitiators entweder homopolymerisieren und/oder copolymerisieren und reagieren daher leicht mit $R_f$-Merkaptanen der Formel (2), wobei die vorliegenden $R_f$-Oligomeren der Formel (1) in hoher Ausbeute gebildet werden.

Bevorzugt werden solche $R_f$-Oligomeren der Formel (1), worin $R_f$ eine geradkettige oder verzweigte Perfluoralkylgruppe mit 6 bis 14 Kohlenstoffatomen, E Äthylen und $-[M_1]-$

$$-[CH_2-\underset{T_1}{\overset{R_1}{C}}]-,\quad -[CH_2-\underset{T_2}{CH}]-\quad \text{oder}\quad -[\underset{T_3}{CH}-\underset{T_4}{CH}]-$$

darstellen, worin

$T_1$ für $-COOMe$, $-CONH_2$, $-CONHR_2$, $-CONR_2R_3$, $-CONH-E_1-NR_2R_3$, $-CONH-E_1-NR_2R_3R_4X$, $-CONH-CH_2OH$, $-CONHCH_2OR_2$, $-CONHE_2OH$, $-CO(OE_1)_n-OR_1$, $-COOCH_2CHOHCH_2OH$, $-CONH-E_2-SO_3Me$ oder $-CON(E_1OH)_2$,

$T_2$ für $-OH$, $-OE_2OR_1$, $-(OE_1)_nOR_1$, $-SO_3Me$, $-C_6H_4SO_3Me$,

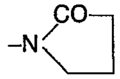 ,

$-NH_2$,

Pyridiniumhalogenid, $-NHCOR_1$ oder

$T_3$ und $T_4$ unabhängig voneinander für $-COOMe$, $-CONH_2$, $-CO(OE_1)_nOR_1$, $-CONH-E_1-OH$ oder $-CON(E_1-OH)_2$,

$R_1$ für Wasserstoff oder Methyl,

$R_2$, $R_3$ und $R_4$ unabhängig voneinander für Alkyl mit 1 bis 6 Kohlenstoffatomen,

$E_1$ für Alkylen mit 2 oder 3 Kohlenstoffatomen,

$E_2$ für Alkylen mit 2 bis 6 Kohlenstoffatomen.

Me für Wasserstoff oder Alkalimetall,

X für Halogenid und

n für 1 bis 20 stehen, und $-[M_2]-$

$$-[CH_2-\underset{G_1}{\overset{R_1}{C}}]-,\quad -[CH_2-\underset{G_2}{CH}]-\quad \text{oder}\quad -[\underset{G_3}{CH}-\underset{G_4}{CH}]-$$

darstellt, worin

$G_1$ für $-COOR_5$, $-OCOR_2$, $-CN$, $-OR_5$, $-C_6H_5$ oder $-C_6H_4X$,

$G_2$ für Wasserstoff, $R_2$ oder Halogenid sowie

$G_3$ und $G_4$ unabhängig voneinander für $-COOR_5$ stehen oder zusammen $-CO-O-CO-$ bedeuten können,

$R_1$, $R_2$ und X die oben angegebene Bedeutung haben und $R_5$ für Alkyl mit 1 bis 18 Kohlenstoffatomen oder Cycloalkyl, Aryl oder Alkenyl mit 6 bis 18 Kohlenstoffatomen steht, wobei die Summe von x und y 4 bis etwa 500 beträgt und $\frac{x}{x+y}$ zwischen 0,5 und 1 liegt. Vorzugsweise beträgt die Summe von x plus y 5 bis 250.

Besonders bevorzugt beträgt die Summe von x und y 10 bis etwa 200, und ganz besonders bevorzugt 10 bis etwa 100, und $\frac{x}{x+y}$ liegt zwischen etwa 0,5 und 1.

Oligomere von besonderem Interesse entsprechen der Formel

$$(4)\qquad R_f-E-S-\left[CH_2\underset{T}{\overset{R'_1}{C}}\right]_x\left[CH_2\underset{G}{\overset{R'_2}{C}}\right]_y-H$$

worin $R_f$ geradkettiges oder verzweigtes Perfluoralkyl mit 6 bis 14 Kohlenstoffatomen, E $-CH_2CH_2-$, $R'_1$ und $R'_2$ unabhängig voneinander Wasserstoff oder Methyl sowie T und G unabhängig voneinander je $-CONH_2$, $-COOH$,

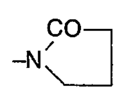 ,

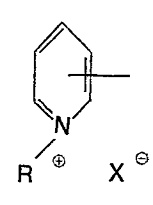

$-COO-E'_1-OH$, $-CONH-E'_1-SO_3H$, $-CONH-CH_2OR'_7$, $-COOCH_2CHOHCH_2{}^{\oplus}NR'_4R'_5R'_6{}^{\ominus}X$ und $-CONHE'_1NR'_4R'_5$ darstellen, wobei R für Äthyl und vorzugsweise Methyl, X für Chlorid oder Bromid, $E'_1$ für geradkettiges oder verzweigtes Alkylen mit 1 bis 3 Kohlenstoffatomen, $R'_4$, $R'_5$ und $R'_6$ unabhängig voneinander für Alkyl mit 1 bis 4 Kohlenstoffatomen und $R'_7$ für Wasserstoff oder Alkyl mit 1 bis 4 Kohlenstoffatomen, vorzugsweise Wasserstoff oder Methyl, stehen, mit $x+y = 5$ bis 500.

Vorzugsweise beträgt x 5 bis 450 und y null.

Ganz besonders bevorzugte $R_f$-Oligomere entsprechen der Formel (5)

$R_f-E-[M_1]-_xH$, worin $R_f$ geradkettiges oder verzweigtes Perfluoralkyl mit 6 bis 14 Kohlenstoffatomen, vorzugsweise lineares Perfluoralkyl mit 6 bis 12 Kohlenstoffatomen, E $-CH_2CH_2-$ und $-[M_1]-$

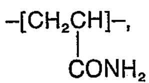 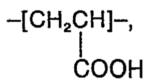 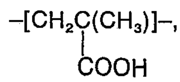

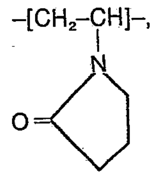 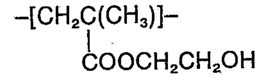

und/oder 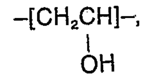

darstellen sowie x 5 bis 250, vorzugsweise 10 bis 200 und besonders bevorzugt 15 bis 50 beträgt.

Ganz besonders bevorzugte, als Proteinschaumzusätze verwendete $R_f$-Oligomere besitzen die oben angeführte Struktur $R_f-E-S-[M_1]-_xH$, worin $-[M_1]-$ für 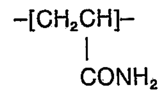

steht und x von 5 bis 100, vorzugsweise 5 bis 50 und besonders bevorzugt 10 bis 50 variiert.

Die für $-[M_1]-$ in der Formel (5) erwähnten wiederkehrenden Einheiten können in den Oligomeren in kombinierter Form vorliegen, d.h. beispielsweise zwei verschiedene hydrophile Einheiten können ein Oligomer der Formel (5) wie

(6) 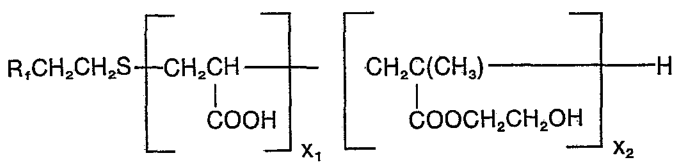

(7) 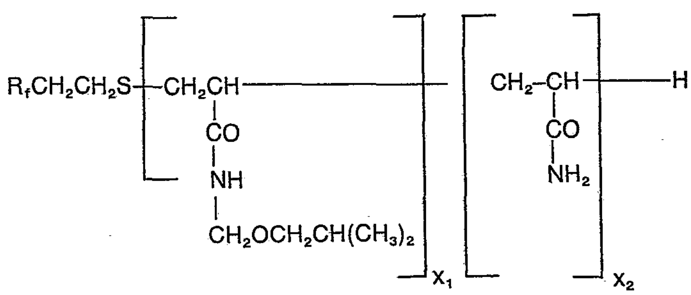

(8) 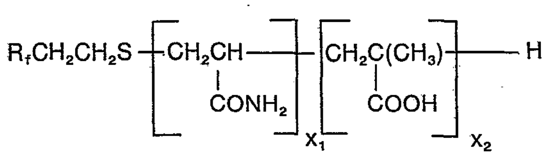

(9) 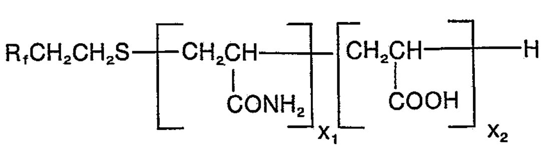

und

(10) 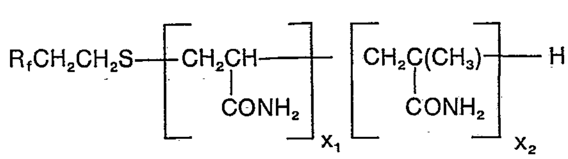

bilden, worin die Summe von $x_1 + x_2$ die in der Formel (5) für x genannte Bedeutung hat. Vorzugsweise beträgt die Summe von $x_1$ und $x_2$ 10 bis 50, und besonders bevorzugt 10 bis 20.

Die Polymerisation erfolgt in einem weitgehend wasserfreien Reaktionsmedium, vorzugsweise in einem niederen Alkohol, wie Methanol oder Isopropanol, oder Aceton oder einem niederen Äthylenglykoläther, wobei die Reaktionspartner und der Katalysator darin gelöst sind.

Im allgemeinen hält man die Oligomerisationstemperatur zwischen 20 und 60 °C, jedoch sind Temperaturen bis zu 100 °C ebenfalls anwendbar. Die optimale Temperatur für jede Oligomerisation lässt sich leicht bestimmen und wird von der Reaktion, der relativen Reaktionsfreudigkeit der Monomeren und dem verwendeten speziellen Radikalinitiator abhängen. Um eine wirksame katalytische Radikalkettenfortpflanzungsreaktion zu erleichtern, ist eine sauerstofffreie Atmosphäre wünschenswert, und die Oligomerisationen werden unter Stickstoff durchgeführt.

Der eingesetzte Katalysator muss ein Radikalinitiator sein, wie Peroxyde, Persulfate oder Azoverbindungen. Diese Stoffe sind in der Technik wohlbekannt. Besonders zweckentsprechende Ergebnisse erhält man jedoch mit organischen Peroxyden und Hydroperoxyden, Wasserstoffperoxyd, Azokatalysatoren und wasserlöslichen Persulfaten. Spezielle Beispiele sind unter anderem Ammoniumpersulfat, Lauroylperoxyd, tert.-Butylperoxyd und insbesondere die Azokatalysatoren 2,2'-Azobis-(isobutyronitril), 2,2'-Azobis-(2,4-dimethylvaleronitril), 2-tert.-Butylazo-2-cyanpropan, 1-tert.-Butylazo-1-cyancyclohexan und 2,2'-Azobis-(2,4-dimethyl-4-methoxyvaleronitril).

Katalytische Mengen Initiator werden verwendet, das heisst zwischen 0,01 und 0,5 Gew.-% auf die Monomeren, je nach dem jeweiligen Initiator und Monomerensystem. Bei dem bevorzugten Azokatalysator werden 0,01 bis 0,2 Gew.-% Azokatalysator auf das Gewicht der Monomeren eingesetzt. Die Verwendung grösserer Mengen Initiator ergibt keinen bedeutsamen Vorteil.

Am einfachsten synthetisiert man die neuartigen $R_f$-Oligomeren aus Monomeren des Typs $M_1$ und $M_2$ in einer einstufigen Polymerisationsreaktion, wie oben dargelegt. Jedoch ist es ebenfalls möglich, und unter Umständen notwendig, die neuartigen $R_f$-Oligomeren in einer Zweistufensynthese aufzubauen. Bei dieser alternativen Synthesemethode werden hydrolysierbare hydrophobe Monomere des Typs $M_2$ in Gegenwart eines $R_f$-Merkaptans der Formel (2) polymerisiert, was ein $-[M_2]-$ Monomereinheiten enthaltendes $R_f$-Oligomer ergibt. In einer zweiten Stufe werden solche $R_f$-Oligomere mit einer Base, vorzugsweise alkoholischer Natrium- oder Kalilauge, hydrolysiert. Bei diesem Hydrolysevorgang werden ausgewählte $-[M_2]-$ Monomereinheiten in hydrophile $-[M_1]-$ Monomereinheiten umgewandelt. So werden Vinylacetatmonomereinheiten in Vinylalkoholmonomereinheiten bzw. Maleinatestereinheiten in Maleinsäuresalzeinheiten umgewandelt. Ähnlich kann man ein Maleinsäureanhydridmonomereinheiten enthaltendes $R_f$-Oligomer hydrolysieren oder amidieren. Dieser zweistufige Weg ist jedoch teurer als der einstufige Syntheseweg, welcher bevorzugt und durch die Verfügbarkeit einer grossen Anzahl handelsüblicher hydrophiler Monomerer des Typs $M_1$ ermöglicht wird.

Um $R_f$-Oligomere der Formel (1) mit den wünschenswertesten Eigenschaften entweder als ein Proteinschaumzusatz oder als Oberflächenspannungserniedriger für wässrige Systeme zu synthetisieren, muss man die oleophoben und hydrophoben Eigenschaften des $R_f$–E–S– Segments mit den hydrophilen Eigenschaften der $-[M_1]-$ Monomereinheiten und den hydrophoben Eigenschaften der $-[M_2]-$ Monomereinheiten im Oligomer in Einklang bringen. Zur Erzielung des erwünschten Eigenschaftsbilds kann es von Vorteil sein, wenn mehr als ein Typ von $-[M_1]-$ Einheiten und mehr als ein Typ $-[M_2]-$ Einheiten im Oligomer vorliegen. Es zeigte sich jedoch, dass der Einbau von hydrophoben $-[M_2]-$ Monomereinheiten in vielen Fällen überhaupt unnötig ist, um den richtigen Ausgleich der oleophob/hydrophoben Eigenschaften gegenüber den hydrophilen Eigenschaften zu erzielen.

Ferner zeigte sich, dass man durch Auswahl der Kettenlänge der $R_f$-Gruppe sowie der Art und dem Verhältnis der $M_1$- und $M_2$-Monomereinheiten die Schaumausbreitungs- und Ablaufgeschwindigkeit des die erfindungsgemässen Oligomeren mit aliphatischen Perfluorsulfidendgruppen enthaltenden Proteinschaums modifizieren kann. Zudem liegt es im Ermessen des Fachmanns, die erfindungsgemässen Oligomeren zum Modifizieren der Schaumausbreitung von Proteinfeuerlöschschäumen zu verwenden, und die vorliegenden Zusammensetzungen lassen sich dabei so einstellen, dass sie bei gegebenem Proteinschaumkonzentrat verbesserte Löschzeiten und die geringste Empfindlichkeit gegen Kohlenwasserstoffaufnahme ergeben. Bei den meisten Anwendungen der neuartigen $R_f$-Oligomeren erwies es sich als wünschenswert, eine Löslichkeit in Wasser oder Wasser/Lösungsmittelgemischen von mindestens 0,01 Gew.-% $R_f$-Oligomer zu erreichen. Diese sehr geringen Mengen $R_f$-Oligomere weisen bereits eine merkliche Wirkung in Proteinschäumen auf.

Ferner zeigte es sich, dass man durch Auswahl der richtigen Monomeren vom $M_1$- und $M_2$-Typ und, was noch wichtiger ist, durch Variation des Polymerisationsgrades, d.h. dem Gewichtsverhältnis des $R_f$-E-S-Segments zu dem durch $-[M_1]_x-$ $-[M_2]_y-$ H gebildeten Segment, $R_f$-Oligomere herstellen kann, welche die Oberflächenspannung wässriger Systeme in jedem gewünschten Mass und sogar bis auf 16 dyn/cm erniedrigen. Es ist zwar wohlbekannt, dass herkömmliche fluorchemische Tenside, wie beispielsweise in US-Patentschriften 2 915 544, 3 274 244, 3 621 059 und 3 668 233, Oberflächenspannungen von Wasser bis auf 15 dyn/cm erniedrigen, doch ist es ebenso wohlbekannt, dass derart extrem niedrige Oberflächenspannungen für viele Anwendungen nicht erforderlich sind, so dass in vielen Fällen die Anwendung der sehr teuren fluorchemischen Tenside entfällt. Mit den vorliegenden $R_f$-Oligomeren kann man $R_f$-Oligomerzusammensetzungen darauf einstellen, jede gewünschte Oberflächenspannung in Wasser zwischen 76 dyn/cm und etwa 16 dyn/cm zu liefern, wie weiter unten durch Beispiele belegt. Diese Möglichkeit, $R_f$-Oligomere für jeden gewünschten Bereich von Oberflächenspannungseigenschaften auszubilden, macht die neuartigen $R_f$-Oligomeren zu einer Klasse von Oberflächenspannungserniedrigern mit einem sehr guten Kosten/Nutzenverhältnis, welche in vielen Anwendungsgebieten nützlich sind, wo man allgemein teurere herkömmliche fluorchemische Tenside als Zusatzstoffe verwendet. Die neuartigen $R_f$-Oligomeren lassen sich deshalb bei Anwendungen einsetzen, wo verbesserte Benetzung und Spreitung von Flüssigkeiten auf schwer benetzbaren bzw. mit Öl oder Silikonen verunreinigten Substraten erforderlich sind. Anwendungsgebiete, wo diese Eigenschaften wässriger $R_f$-Oligomere enthaltender Systeme erforderlich sind, umfassen: Druckfarben, Anstrichfarben, Metall- und Büchsenüberzüge, Boden-, Möbel- und Autopolituren, Reinigungsmittel und Entfettungsmittel, photographische, insektizide, herbizide und bakteriostatische Emulsionen und Dispersionen, Pigment- und Farbstoffdispersionen und Faser-, Textil- und Lederausrüstungen, Verbraucherprodukte und Körperpflegemittel wie Haarsprays, Schampoos und Regenerationsmittel, Rasierkreme und Hautschutzprodukte, Ölwiedergewinnungssysteme und -aufbrechflüssigkeiten, sowie viele weitere Gebiete, wo herkömmliche fluorchemische Tenside zur Anwendung kommen.

Wie zuvor angegeben sind die neuartigen $R_f$-Oligomeren besonders nützlich als Zusätze zu als Feuerlöschschäume verwendeten wässrigen Proteinhydrolysatschaumkonzentraten. Solche die neuartigen $R_f$-Oligomeren enthaltenden sogenannten Fluorproteinschaumkonzentrate zeigen eine ausgezeichnete Schaumausbreitung, eine gute Stabilität (nur langsamer Zusammenfall des Schaums), und hohe Toleranz gegen Verunreinigung mit Brennstoff. Dadurch lassen sich schwer zu bekämpfende Brennstoffbrände mit solchen Fluorproteinschäumen beherrschen und löschen, und sie bilden eine sichere und langdauernde Schaumdecke, die das Entweichen entzündlicher Dämpfe unterdrückt, hohe Stabilität und Hitzebeständigkeit aufweist, wirksame Abdichtung gegen heisse Tankwände ergibt und hohen Widerstand gegen Wiederentflammung und Zurückschlagen besitzt.

Weitere die überlegenen Fluorproteinzusammensetzungen auszeichnende Faktoren sind das Löschen von Randfeuern, Glätte der Schaumdekke und minimale Verkohlungseigenschaften. Die vorliegenden oligomeren Tenside verleihen Fluorproteinschaumfeuerlöschmitteln diese hervorragenden Eigenschaften. Solche Fluorproteinschaumkonzentrate können direkt mit Frisch- oder Meerwasser dosiert (verdünnt) werden und weisen ausgezeichnete Langzeitstabilität auf. Man kann sie direkt auf die Oberfläche von Auslaufbränden aufbringen, oder auch durch Tauchanwendungsmethoden wie in Tanklagerschutzsystemen. Dabei wird der wässrige Fluorproteinschaum unter der Oberfläche der brennenden Flüssigkeit eingeführt und steigt zur Oberfläche, wo sich der Schaum ausbreitet und das Feuer löscht.

Vorzugsweise wird solch ein Verfahren zum Löschen einer brennenden hydrophoben Flüssigkeit in einem Lagertank oder Behälter angewandt, wobei man unter die Oberfläche der brennenden Flüssigkeit einen wässrigen Schaum einbringt, der dann zur Oberfläche dieser Flüssigkeit steigt, wobei dieser Schaum aus einer wässrigen Proteinhydrolysatlösung einer genügenden Konzentration, um den Schaum nahezu vollständig zu stabilisieren, erzeugt wird und diese wässrige Lösung ferner etwa 0,003 bis 0,3 Gew.-% eines Oligomeren der Formel (1) oder der Formeln (4) bis (10) enthält.

In dem Feuerlöschverfahren, bei dem die vorliegenden Fluorproteinschaumfeuerlöschzusammensetzungen in Verbindung mit einem Pulverfeuerlöschmaterial angewandt werden, bringt man dieses zunächst zum Löschen des Feuers auf das brennbare Material (üblicherweise eine leicht entzündliche Flüssigkeit) und danach die oben beschriebene Fluorproteinschaumzusammensetzung auf die Oberfläche auf, um das brennbare Material zu bedecken und so dessen Wiederentflammung an heissen Flächen zu verhindern.

Proteinschäume sind im Handel als Konzentrate für 3- oder 6%-Dosierung erhältlich. Dies bedeutet, dass man bei Verwendung dieser Konzentrate das 3%-Konzentrat mit Frisch- oder Meerwasser im Verhältnis von 3 Volumen Konzentrat auf 97 Volumen Wasser vermischt. Ähnlich wird das 6%-Konzentrat mit Frisch- oder Meerwasser in einem Verhältnis von 6 Volumen Konzentrat auf 94 Volumen Wasser vermischt. Somit werden die vorliegenden Oligomeren im 3%-Konzentratstyp in Mengen eingearbeitet, die zwischen etwa 0,1 und etwa 10% variieren. Bei einem 6%-Konzentratstyp liegt ähnlicherweise die eingearbeitete Oligomerenmenge zwischen etwa 0,2 und etwa 20%. Die genaue Menge hängt von den erwünschten Wirkungen ab.

Die Konzentrate werden in der Regel mit Wasser verdünnt und liefern dann eine wässrige schaumbildende Proteinhydrolysatkonzentratzusammensetzung zur Bildung von Feuerlöschschaum nach etwa 15- bis etwa 35facher Volumenverdünnung mit Wasser, wobei diese Zusammensetzung aus einer wässrigen Proteinhydrolysatlösung, die genügend Proteinhydrolysat enthält, um den nach dem Verdünnen gebildeten Schaum nahezu vollständig zu stabilisieren, und einem Oligomer der Formel (1) oder der Formeln (4) bis (10) in gelöster oder dispergierter Form in einer solchen Konzentration, dass sich nach der Verdünnung etwa 0,003 bis etwa 0,3 Gew.-% dieses Oligomeren ergeben, besteht.

BEISPIELE

Im folgenden findet sich eine Reihe von Beispielen, die die Herstellung und Anwendbarkeit der erfindungsgemässen Oligomeren veranschaulichen sollen.

In den nachfolgenden Beispielen bezieht sich $R_f$ auf ein Gemisch von Perfluoralkylgruppen ungefähr im folgenden Gewichtsverhältnis, falls nicht anders angegeben: $C_6F_{13}/C_8F_{17}/C_{10}F_{21}$ = im wesentlichen 34%/38%/23% und es enthält gegebenenfalls auch $C_{12}F_{25}$. Noch höhere Perfluoralkylgruppen können in kleinen Mengen vorliegen.

Beispiele 1 bis 73 erläutern die Herstellungsmethoden für die vorliegenden Oligomeren. Beispiele 74 bis 123 zeigen, wie man sie zum Modifizieren des Schaumausbreitungsverhältnisses und der Ablaufgeschwindigkeit von Proteinschäumen anwenden kann. Beispiele 124 bis 148 illustrieren schliesslich die Verwendbarkeit der Oligomeren in Harz- und Beschichtungssystemen.

Die Herstellung der Oligomeren ist recht einfach, und in Abwesenheit von Luft oder Sauerstoff tritt die Reaktion leicht ein, wie sich durch das Erscheinen eines Feststoffs zeigt, der sich häufig innerhalb weniger Stunden ausscheidet. Die Oligomeren werden direkt charakterisiert unter Anwendung von HPLC-Methoden (Hochleistungsflüssigkeitchromatographie). Die Produktbildung bestätigt sich auch durch das völlige Verschwinden des durch die Jodprüfung bestimmten Merkaptans und den fast vollständigen Verbrauch des Monomeren, wie spezifisch durch HPLC bestimmt. Die Oligomeren sind durch ihre Wasserlöslichkeit, ihr Vermögen, die wässrige Oberflächenspannung zu erniedrigen, und ihre Wirkung auf die Eigenschaften von Proteinschaum gekennzeichnet.

Die für das Oligomer angegebenen Strukturen mit Einzelwerten für x+y sind idealisiert. HPLC-Analyse zeigt, dass sich solche Produkte aus einer Verteilung von Zusammensetzungen, die sich um einen Einzelwert von x+y als Mittel gruppieren, aufbauen.

Beispiel 1

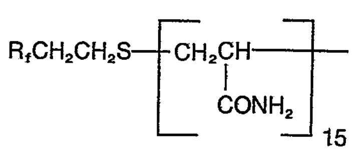

Man beschickt einen 4-Literreaktor mit 0,73 kg Methanol und dann gleichzeitig mit zwei Reaktionspartnerströmen, wovon einer 0,64 kg Acrylamid in 0,64 kg Methanol und der andere 0,28 kg $R_fCH_2CH_2SH$, 0,28 kg Methanol und 0,6 g 2,2'-Azobis-(2,4-dimethylvaleronitril) als Polymerisationsinitiator enthält. Diese Reaktionspartnerverhältnisse entsprechen 1 Mol $R_fCH_2CH_2SH$ auf 15 Mol Acrylamid. Die beiden Ströme werden im Verlauf von 2 Stunden bei 58 bis 63 °C dem Reaktor zugeführt, was zur kontinuierlichen Bildung eines telomeren Produkts mit der Möglichkeit einer sicheren, vollständigen Beherrschung der exothermen Oligomerisation führt. Nach beendeter Zugabe hält man das Reaktionsgemisch 4 Stunden bei 58 bis 63 °C, währenddessen eine weitere Menge von 0,06 g Initiator in Methanol zugesetzt wird. Das Produkt wird dann mit Wasser auf 20% Aktivstoffe verdünnt, was eine klare, zur Verwendung als Zusatzstoff bei Feuerlöschanwendungen geeignete Lösung ergibt.

Hochdruckflüssigkeitschromatographieanalyse (HPLC) des Produkts unter Verwendung von Ultraviolet (UV) (215 nm) zum Nachweis und von Gradientelutionsmethoden mit umgekehrten Phasen zeigt die Produktverteilung an.

Der Verbrauch des Acrylamidmonomeren wird ebenfalls durch HPLC-Analyse des Produkts unter Anwendung von UV-Nachweis und Gradientelutionsmethoden bestätigt.

Die Oberflächenspannung des Produkts ist wie folgt:

| % Aktivstoffe | 0,001 | 0,01 | 0,1 |
|---|---|---|---|
| Oberflächenspannung dyn/cm | 62 | 30 | 21 |
| $R_f$-Verteilung %: $C_6$, $C_8$, $C_{10}$, $C_{12}$ = 34, 36, 23, 5 | | | |

Beispiele 2–7

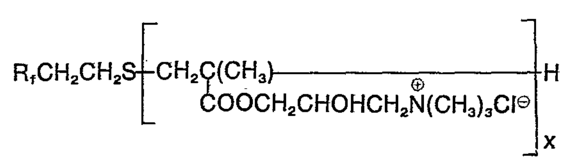

In 118 ml-Glasflaschen gibt man $R_fCH_2CH_2SH$, 3-Trimethylammonio-2-hydroxypropylmethacrylat-chlorid (THMA), 34,5 g Methanollösungsmittel, um eine Lösung mit 25% Feststoffen zu ergeben, und 0,15 g 2,2'-Azobis-(2,4-dimethylvaleronitril). Die Flaschen werden dann mit Stickstoff durchgespült, verschlossen und 18 Stunden in ein Schüttelwasserbad bei 58 °C gestellt. Sowohl das anfängliche Reaktionsgemisch als auch die Endprodukte sind klare Lösungen in Methanol. Nach Beendigung der Reaktionszeit wird der Inhalt der Flaschen durch 20 Stunden Erhitzen in einem Umlufttrockenschrank bei 75 °C und schliesslich 5 Stunden bei 40 °C in einem Vakuumtrockenschrank bei 0,2 Torr zu einem festen Produkt getrocknet. Die entstandenen, in weitgehend quantitativer Ausbeute erhaltenen Produkte sind hellbernsteinfarbene spröde Feststoffe.

Tabelle 1 gibt die Versuchsdaten für die Herstellung dieser verschiedenen $R_f$-Oligomeren an. In Tabelle 2 sind die Oberflächenspannungswerte der $R_f$-Oligomeren bei jeweils 0,1% Feststoffen angeführt.

Tabelle 1

| Beispiel | Mol | $R_fCH_2CH_2SH$ MG=465 Gewicht (g) | Mol | THMA MG=238 Gewicht (g) | Wert von (x) |
|---|---|---|---|---|---|
| 2 | 0,007 | 3,3 | 0,035 | 8,3 | 5 |
| 3 | 0,004 | 1,9 | 0,04 | 9,5 | 10 |
| 4 | 0,0018 | 0,84 | 0,045 | 10,7 | 25 |
| 5 | 0,0006 | 0,24 | 0,047 | 11,2 | 75 |
| 6 | 0,00024 | 0,11 | 0,048 | 11,4 | 200 |
| 7 | ohne | | 0,048 | 11,4 | – |

Tabelle 2

| Produkt aus Beispiel | Wert von (x) | Oberflächenspannung in dyn/cm in entionisiertem Wasser bei 25 °C, 0,1% Feststoffe in Lösung |
|---|---|---|
| 2 | 5 | 24 |
| 3 | 10 | 24 |
| 4 | 25 | 27 |
| 5 | 75 | 33 |
| 6 | 200 | 40 |
| 7 | – | 58 |

Beispiel 8

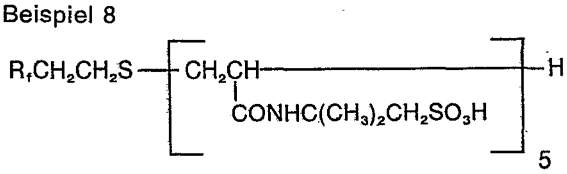

Man verfährt wie in den Beispielen 2–7, und es werden 2,35 g (0,005 Mol) $R_fCH_2CH_2SH$, 5,2 g (0,025 Mol) 2-Acryloylamido-2-methylpropansulfonsäure (AMPS), 22,7 g Methanollösungsmittel und 0,06 g Azokatalysator wie in Beispiel 1 zur Reaktion gebracht. Das Endprodukt ist ein weisses Pulver (% F berechnet 20,5%; gefunden 17,1%), welches in entionisiertem Wasser bei 25 °C Oberflächenspannungswerte (dyn/cm) von 26 bei 0,1% Feststoffen, 33 bei 0,01% Feststoffen und 53 bei 0,001% Feststoffen ergibt.

Beispiel 9

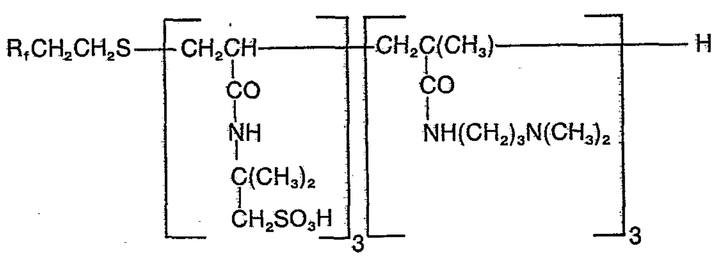

Man verfährt wie in den Beispielen 2 bis 7, wobei die folgenden Stoffe in dieser Reihenfolge in eine 236 ml-Flasche gegeben werden: 59,7 g Isopropanollösungsmittel, 9,3 g (0,045 Mol) 2-Acryloylamido-2-methylpropansulfonsäure, 7,7 g (0,045 Mol) N-3-Dimethylaminopropylmethacrylamid (DMAPMA), 8,3 g (0,015 Mol) $R_fCH_2CH_2SH$ und schliesslich 0,25 (0,001 Mol) Azokatalysator wie in Beispiel 1. Beim Erwärmen wird das Gemisch anfänglich homogen, und es wird dann 19 Stunden bei 60 °C umgesetzt. Am Ende der Reaktion entsteht ein weisser Niederschlag. Der Flascheninhalt wird mit 500 ml trockenem Methyläthylketon in einen Mischer gegeben, wobei man ein feinverteiltes Pulver erhält, das durch Filtrieren isoliert und 2,5 Stunden bei 50 °C und 0,2 Torr getrocknet wird. Man gewinnt das amphotere Oligomerprodukt als wasserlösliches weisses Pulver in einer Ausbeute von 22,2 Gramm (86,8% der Theorie). Eine wässrige Lösung des Produktes schäumt beim Schütteln.

Die Oberflächenspannungswerte (dyn/cm) in entionisiertem Wasser bei 25 °C betragen für dieses Produkt 33 bei 0,1% Feststoffen, 34 bei 0,01% Feststoffen, 45 bei 0,001% Feststoffen und 63 bei 0,0001% Feststoffen.

Beispiele 10–11

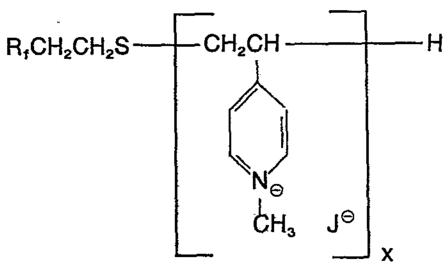

Unter Verwendung von 236 ml-Flaschen vermischt man $R_fCH_2CH_2SH$, 4-Vinylpyridin, so viel Isopropanol, dass sich 30 gew.-%ige Feststofflösungen ergeben, und 0,25 g (0,001 Mol) Azokatalysator wie in Beispiel 1. Die Flaschen werden mit Stickstoff durchgespült, verschlossen und 18 Stunden in ein Schüttelwasserbad bei 58 °C gestellt. Zu Anfang sind die Gemische fest homogene Lösungen.

In einer zweiten Stufe gibt man dann Methyljodid in einer gleichen Gewichtsmenge Isopropanol zum Reaktionsgemisch in den Flaschen und lässt 1 Stunde bei 60 °C weiterreagieren. Die festen Produkte isoliert man durch Abdampfen des Lösungsmittels in einem Umlufttrockenschrank bei 75 °C und danach 2 Tage bei 75 °C und 50 Torr. Die Produkte bilden trübe Lösungen in Wasser, die beim Schütteln schäumen.

In Tabelle 3 sind die Versuchsdaten für die Herstellung dieser verschiedenen kationischen Oligomeren angeführt.

Tabelle 4 gibt eine Beschreibung der Produkte sowie die Oberflächenspannungswerte (dyn/cm) in entionisiertem Wasser bei 25 °C.

Tabelle 3

| | $R_fCH_2CH_2SH$ MG 465 | | 4-Vinylpiridin MG 105 | | | Methyljodid MG 142 | |
|---|---|---|---|---|---|---|---|
| Beispiel | Mol | Gewicht (Gramm) | Mol | Gewicht (Gramm) | Wert von (x) | Mol | Gewicht (Gramm) |
| 10 | 0,02 | 9,3 | 0,10 | 10,5 | 5 | 0,10 | 14,2 |
| 11 | 0,015 | 7,0 | 0,15 | 15,8 | 10 | 0,15 | 21,3 |

Tabelle 4

| Beispiel | Physikalischer Zustand | Gramm | Ausbeute % der Theorie | Wert von (x) | Oberflächenspannung, dyn/cm bei 25°C in entionisiertem Wasser (% Feststoffe in Lösung) 0,1% | 0,01% |
|---|---|---|---|---|---|---|
| 10 | grüngelber Feststoff | 32,8 | 97 | 5 | 21 | 37 |
| 11 | bernsteinfarbener Feststoff | 42,5 | 97 | 10 | 22 | 41 |

Beispiele 12–14

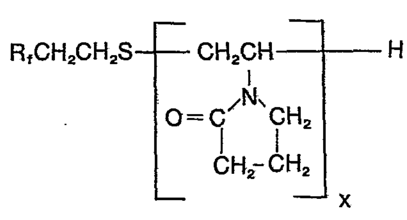

Auf die folgende Weise werden Beispiele 12–14 mit den in Tabelle 5 angegebenen Einsatzmengen in einem mit mechanischem Rührer, Thermometer, Stickstoffeinlassrohr und Trockenrohr ausgerüsteten 1000 ml-Dreihalskolben durchgeführt, wobei man in dieser Reihenfolge $R_fCH_2CH_2SH$, N-Vinyl-2-pyrrolidon, Äthylenglykolätherlösungsmittel und Azokatalysator wie in Beispiel 1 zusetzt. Die Systeme werden unter Stickstoff gehalten und langsam auf 60 °C erhitzt und noch 17 Stunden unter Rühren bei 59 bis 63 °C gehalten. Die nominell 37,5%igen Feststofflösungen in Äthylenglykoläther werden auf 30 °C abgekühlt und unter Rühren mit Wasser verdünnt. Die entstandenen klaren hellgelben Lösungen werden filtriert, um Klarheit zu gewährleisten. Der tatsächliche Feststoffgehalt (Aktivstoffe) wird durch Eindampfen der filtrierten Lösungen über Nacht im Umluftofen bei 60 °C erhalten.

In Tabelle 5 sind die speziellen Versuchsdaten zur Herstellung dieser nicht-ionogenen Oligomeren mit verschiedenen x-Werten angeführt.

Tabelle 5

| Beispiel | | 12 | 13 | 14 |
|---|---|---|---|---|
| $R_fCH_2CH_2SH$ | Gramm | 69,8 | 21,3 | 6,1 |
| | Mol | 0,15 | 0,046 | 0,013 |
| N-Vinyl-2-pyrrolidon | | | | |
| | Gramm | 200 | 203,5 | 174 |
| | Mol | 1,18 | 1,83 | 1,56 |
| Äthylenglykoläthyläther | | | | |
| | Gramm | 450 | 375 | 300 |
| Azokatalysator | Gramm | 0,67 | 0,57 | 0,45 |
| | Mol | 0,0027 | 0,0023 | 0,0018 |
| Wasser (Verdünnung) | | | | |
| | Gramm | 180 | 300 | 420 |
| x (ungefähr) | | 12 | 40 | 120 |
| Nominelle Zusammensetzung (Gew.-%) | | | | |
| Äthylenglykoläthyläther | | 50 | 41,7 | 33,3 |
| Wasser | | 20 | 33,3 | 46,7 |
| Feststoffe (Aktivstoffe) | | 30 | 25 | 20 |
| Fluorgehalt der Feststoffe, % | | | | |
| berechnet | | 17,2 | 6,3 | 2,2 |
| gefunden | | 15,6 | 5,5 | 1,8 |
| Oberflächenspannung, dyn/cm in entionisiertem Wasser bei 25 °C für Feststoffgehalte von | | | | |
| 0,001% | | 56 | 59 | 65 |
| 0,01% | | 27 | 27 | 46 |
| 0,1% | | 19 | 20 | 21 |

Beispiele 15–17

Man verfährt wie in den Beispielen 12–14 zur Herstellung weiterer Proben nicht-ionogener Oligomerer mit verschiedenen x-Werten.

Tabelle 6

| Beispiel | | 15 | 16 | 17 |
|---|---|---|---|---|
| $R_fCH_2CH_2SH$ | Gramm | 12,4 | 6,0 | 3,4 |
| | Mol | 0,027 | 0,013 | 0,007 |
| N-Vinyl-2-pyrrolidon | Gramm | 355,5 | 355,5 | 361 |
| | Mol | 3,2 | 3,2 | 3,25 |
| Äthylenglykoläthyläther | Gramm | 613 | 602 | 607 |
| Azokatalysator | Gramm | 0,92 | 0,90 | 0,91 |
| | Mol | 0,0037 | 0,0036 | 0,0037 |
| Wasser (Verdünnung | Gramm | 859 | 844 | 851 |
| x (ungefähr) | | 120 | 250 | 450 |
| Berechnete % Feststoffe (Aktivstoffe) | | 20 | 20 | 20 |
| Oberflächenspannung, dyn/cm in entionisiertem Wasser bei 25 °C für Feststoffgehalte von | | | | |
| 0,001% | | 66 | 63 | 68 |
| 0,01% | | 42 | 51 | 59 |
| 0,1% | | 20 | 27 | 32 |

Beispiele 18–24

Man verfährt wie in den Beispielen 12–14 und setzt $R_fCH_2CH_2SH$, N-Vinyl-2-pyrrolidon, so viel Acetonlösungsmittel, dass sich Lösungen mit 25% Feststoffen ergeben, und Azokatalysator wie in Beispiel 1 18 Stunden bei 60 °C um.

Die Versuchsdaten für diese nicht-ionogenen Oligomeren, die als weisse Feststoffe in weitgehend quantitativer Ausbeute hergestellt werden, sind in Tabelle 7 angeführt.

Tabelle 7

| Beispiel | 18 | 19 | 20 | 21 | 22 | 23 | 24 |
|---|---|---|---|---|---|---|---|
| $R_fCH_2CH_2SH$ | | | | | | | |
| Gramm | 9,3 | 7,0 | 4,6 | 1,4 | 0,62 | 0,31 | 0,20 |
| Mol | 0,02 | 0,015 | 0,01 | 0,003 | 0,0013 | 0,0007 | 0,0004 |
| N-Vinyl-2-pyrrolidon | | | | | | | |
| Gramm | 11,1 | 16,7 | 16,7 | 10,0 | 11,1 | 11,1 | 11,6 |
| Mol | 0,10 | 0,15 | 0,15 | 0,09 | 0,1 | 0,1 | 0,105 |
| Aceton | | | | | | | |
| Gramm | 61 | 71 | 64 | 34 | 35 | 34 | 36 |
| Azokatalysator | | | | | | | |
| Gramm | 0,20 | 0,20 | 0,20 | 0,15 | 0,15 | 0,15 | 0,15 |
| Mol | 0,0008 | 0,0008 | 0,0008 | 0,0006 | 0,0006 | 0,0006 | 0,0006 |
| x (ungefähr) | 5 | 10 | 15 | 30 | 75 | 150 | 250 |
| Oberflächenspannung, dyn/cm in entionisiertem Wasser bei 25 °C für Feststoffgehalte von | | | | | | | |
| 0,001% | 46 | 48 | 48 | 55 | 64 | 64 | – |
| 0,01% | 20 | 22 | 23 | 23 | 42 | 48 | – |
| 0,1%* | 17 | 18 | 18 | 18 | 18 | 20 | 21 |

* Poly-(vinylpyrrolidon) allein bei 0,1% = 65 dyn/cm

Beispiele 25–28

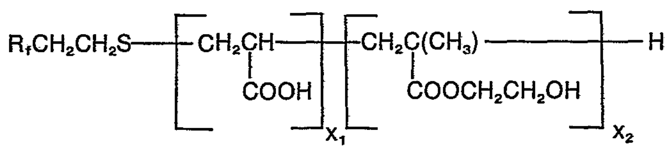

Man verfährt wie im Beispiel 9 und setzt $R_fCH_2CH_2SH$, Acrylsäure, 2-Hydroxyäthylmethacrylat (dies sind beides hydrophile Monomere), so viel Acetonlösungsmittel, dass sich Lösungen mit 30% Feststoffen ergeben, und Azokatalysator wie in Beispiel 1 19 Stunden bei 60 °C um. Nach Abdampfen des Lösungsmittels isoliert man die Produkte in weitgehend quantitativer Ausbeute als weisse, in wässriger Äthylenglykoläthylätherlösung lösliche Feststoffe.

In Tabelle 8 sind die Versuchsdaten zur Herstellung dieser oligomeren Materialien angeführt.

Tabelle 8

| Beispiel | | 25 | 26 | 27 | 28 |
|---|---|---|---|---|---|
| $R_fCH_2CH_2SH$ | Gramm | 9,3 | 9,3 | 9,3 | 9,3 |
| | Mol | 0,02 | 0,02 | 0,02 | 0,02 |
| Acrylsäure | Gramm | 2,9 | 5,8 | 8,7 | 11,5 |
| | Mol | 0,04 | 0,08 | 0,12 | 0,16 |
| 2-Hydroxyäthyl-methacrylat (HEMA) | Gramm | 20,8 | 15,6 | 10,4 | 5,2 |
| | Mol | 0,16 | 0,12 | 0,08 | 0,04 |
| Aceton | Gramm | 77 | 72 | 66 | 61 |
| Azokatalysator | Gramm | 0,25 | 0,25 | 0,25 | 0,25 |
| | Mol | 0,001 | 0,001 | 0,001 | 0,001 |
| $x_1$ (ungefähr) | | 2 | 4 | 6 | 8 |
| $x_2$ (ungefähr) | | 8 | 6 | 4 | 2 |
| Oberflächenspannung, dyn/cm in entionisiertem Wasser bei 25 °C für Feststoffgehalte von | | | | | |
| 0,01% | | 27 | 27 | 35 | 43 |
| 0,1% | | 23 | 23 | 23 | 23 |

Beispiele 29–31

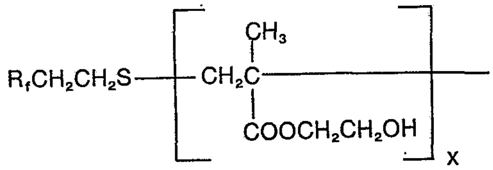

Man verfährt wie in Beispiel 1 und setzt $R_fCH_2CH_2SH$, 2-Hydroxyäthylmethacrylat, Acetonlösungsmittel und 0,25 Gramm (0,001 Mol) Azokatalysator wie in Beispiel 1 17 Stunden bei 60 °C um. Man wendet so viel Acetonlösungsmittel an, dass sich Lösungen mit 30% Feststoffen ergeben. Die Produkte werden als weisse kristalline Feststoffe in weitgehend quantitativer Ausbeute isoliert. Die Feststoffe sind in wässriger Äthylenglykoläthylätherlösung löslich.

Die Versuchsdaten zur Herstellung dieser oligomeren Materialien sind in Tabelle 9 angeführt.

Tabelle 9

| Beispiel | | 29 | 30 | 31 |
|---|---|---|---|---|
| $R_fCH_2CH_2SH$ | Gramm | 9,3 | 7,0 | 4,6 |
| | Mol | 0,02 | 0,015 | 0,01 |
| 2-Hydroxyäthyl-methacrylat (HEMA) | Gramm | 13,0 | 19,5 | 19,5 |
| | Mol | 0,10 | 0,15 | 0,15 |
| Aceton | Gramm | 52 | 62 | 56 |
| x (ungefähr) | | 5 | 10 | 15 |

Beispiele 32–35

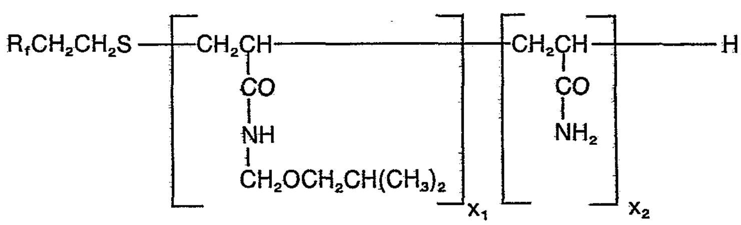

Man verfährt wie in Beispiel 1 und setzt $R_fCH_2CH_2SH$, N-(Isobutoxymethyl)-acrylamid, Acrylamid (dies sind beides hydrophile Monomere), Acetonlösungsmittel und 0,15 g (0,0006 Mol) Azokatalysator wie in Beispiel 1 5,5 Stunden bei 58 °C um. Man wendet so viel Aceton an, dass sich Lösungen mit 25% Feststoffen ergeben. Die festen Produkte werden in weitgehend quantitativer Ausbeute isoliert.

Die Versuchsdaten zur Herstellung dieser oligomeren Materialien sind in Tabelle 10 angeführt.

Tabelle 10

| Beispiel | | 32 | 33 | 34 | 35 |
|---|---|---|---|---|---|
| $R_fCH_2CH_2SH$ | Gramm | 5,8 | 4,7 | 3,5 | 2,8 |
| | Mol | 0,0125 | 0,01 | 0,0075 | 0,006 |
| N-(Isobutoxymethyl)-acrylamid | Gramm | 9,8 | 7,9 | 5,9 | 4,7 |
| | Mol | 0,0625 | 0,05 | 0,0375 | 0,03 |
| Acrylamid | Gramm | – | 3,6 | 5,3 | 6,4 |
| | Mol | – | 0,05 | 0,075 | 0,09 |
| Aceton | Gramm | 47 | 48 | 44 | 42 |
| $x_1$ (ungefähr | | 5 | 5 | 5 | 5 |
| $x_2$(ungefähr) | | 0 | 5 | 10 | 15 |

Beispiele 36–40

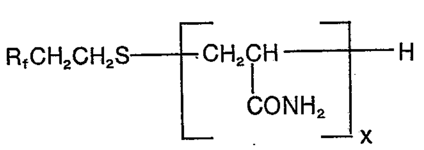

Die folgenden Beispiele werden mit $R_fCH_2CH_2SH$ und Acrylamid unter Verwendung des Katalysators wie in Beispiel 1 durchgeführt. Man lässt die Umsetzungen 16 Stunden bei 60 °C in Isopropanol mit 20% Feststoffgehalt ablaufen und verdünnt dann zur Analyse mit Wasser auf 7% Feststoffgehalt.

Tabelle 11

| Beispiel | 36 | 37 | 38 | 39 | 40 |
|---|---|---|---|---|---|
| $R_fCH_2CH_2SH$, Mol[a] | 0,01 | 0,01 | 0,01 | 0,01 | 0,01 |
| Acrylamid, Mol | 0,05 | 0,10 | 0,15 | 0,25 | 0,25 |
| x-Wert | 5 | 10 | 15 | 25 | 50 |
| Oberflächenspannung, 0,01%, dyn/cm | 19,4[b] | 22,8 | 26,5 | 34,8 | 44,5 |

[a]$R_f$-Verteilung, %: $C_6$, $C_8$, $C_{10}$, $C_{12}$ = 33, 38, 23, 5
[b]trüb

[a] Beispiel 41: $R_f = C_6F_{13}$
Beispiel 42: $R_f = C_8F_{17}$

Beispiele 41–42

Um den Effekt der $R_f$-Kettenlänge der Oligomeren auf das Schaumausbreitungsverhältnis aufzuzeigen, werden die folgenden Oligomeren synthetisiert:

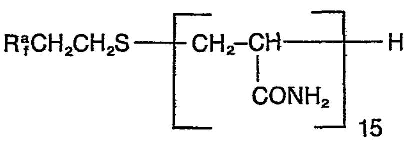

570 ml-Flaschen werden mit 10,8 g $C_6F_{13}CH_2CH_2SH$ (bzw. 13,55 g $C_8F_{17}CH_2CH_2SH$), 30 g Acrylamid, 132,4 g Isopropylalkohol (IPA) und 0,03 g Katalysator wie in Beispiel 1 beschickt. Die Flaschen werden gründlich mit Stickstoff durchgespült und über Nacht in ein 75 °C warmes Bad gestellt. Die Produkte werden durch Abdampfen von IPA und Zusatz von Wasser als Gemische von 20% Feststoffen, 25% IPA und 55% Wasser isoliert.

Die Produkte werden durch HPLC analysiert, was eine Komponentenverteilung unter einer Hüllkurve zeigt. Der Mittelpunkt der Verteilungshüllkurve des $C_8F_{17}$-Derivats liegt bei einer längeren Retentionszeit als derjenige der $C_6F_{13}$-Verteilungshüllkurve.

Beispiele 43–45

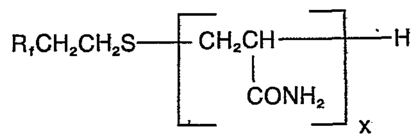

Die folgenden Beispiele werden mit $R_fCH_2CH_2SH$ und Acrylamid unter Verwendung von 2,2'-Azobis-(2,4-dimethylvaleronitril) als Katalysator durchgeführt. Man lässt die Umsetzungen 16 Stunden in Aceton bei 60 °C mit 35% Feststoffgehalt ablaufen und erhält die Produkte quantitativ als Pulver durch Abdampfen des Lösungsmittels bei 45 °C in einem Zwangsumlufttrockenschrank.

Tabelle 12

| Beispiel | 43 | 44 | 45 |
|---|---|---|---|
| $R_fCH_2CH_2SH$[a] g, Mol | 4,38, 0,01 | 4,38, 0,01 | 4,38, 0,01 |
| Acrylamid g, Mol | 3,55, 0,05 | 7,11, 0,10 | 10,66, 0,15 |
| x-Wert | 5 | 10 | 15 |
| Oberflächenspannung, dyn/cm | | | |
| bei 0,1% | 15,6[b] | 16,6 | 16,8 |
| bei 0,01% | 19,2[b] | 19,1 | 22,3 |

[a]$R_f$-Verteilung %: $C_6$, $C_8$, $C_{10}$, $C_{12}$ = 46, 42, 10, 1
[b]trüb

Beispiele 46–51

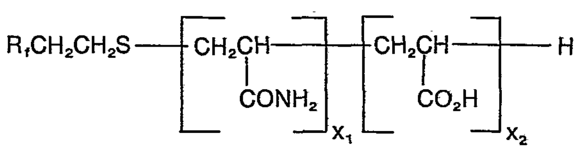

Die folgenden Materialien werden in dieser Reihenfolge in das Reaktionsgefäss gegeben: Acrylamid, Acrylsäure (dies sind beides hydrophile Monomere), $R_fCH_2CH_2SH$, so viel Isopropylalkohol, dass sich eine Lösung mit 20% Feststoffen ergibt, und Azokatalysator wie in Beispiel 1. Das Reaktionsgefäss wird dann mit Stickstoff durchgespült und 20 Stunden in ein 70 °C warmes Bad eingesetzt.

Die erhaltenen Produkte stellt man in einen Umlufttrockenschrank bei 60 °C, um das Lösungsmittel zu entfernen, und danach in einen Vakuumtrokkenschrank zur Entfernung nicht umgesetzter Monomerer.

Versuchsdaten zur Herstellung dieser oligomeren Materialien sind in Tabelle 13 angeführt. Alle Polymeren werden in 90% Ausbeute gewonnen.

Tabelle 13

| Beispiel | | 46 | 47 | 48 | 49 | 50 | 51 |
|---|---|---|---|---|---|---|---|
| $R_fCH_2CH_2SH$[a] | Mol | 0,013 | 0,013 | 0,013 | 0,013 | 0,013 | 0,013 |
| Acrylamid | Mol | 0,225 | 0,247 | 0,221 | 0,130 | 0,026 | – |
| Acrylsäure | Mol | 0,006 | 0,013 | 0,039 | 0,130 | 0,234 | 0,260 |
| IPA | Gramm | 124 | 126 | 126 | 126 | 126 | 125 |
| Azokatalysator | Gramm | 1,9 | 1,9 | 1,9 | 1,9 | 1,9 | 1,9 |
| $x_1$ | | 19,6 | 19 | 17 | 10 | 2 | 0 |
| $x_2$ | | 0,4 | 1 | 3 | 10 | 18 | 20 |
| % F berechnet | | 16,9 | 16,9 | 16,9 | 16,8 | 16,8 | 16,7 |

[a]$R_f$-Verteilung, %: $C_6$, $C_8$, $C_{10}$, $C_{12}$ = 33, 36, 23, 7

Beispiel 52

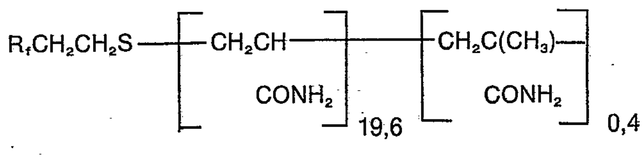

Das Reaktionsgefäss wird mit Acrylamid (0,255 Mol), Methacrylamid (0,0052 Mol), $R_fCH_2CH_2SH$[a] (0,013 Mol), Isopropanol (127 g) und Katalysator wie in Beispiel 1 (1,9 g) beschickt. Man spült das Reaktionsgefäss mit Stickstoff durch und stellt es 20 Stunden in ein 70 °C warmes Bad. Das Produkt wird in einem Umlufttrockenschrank bei 60 °C vom Lösungsmittel befreit, und nicht umgesetzte Monomere werden danach im Vakuumtrockenschrank entfernt. Man erhält das Produkt in 93% Ausbeute (% F berechnet: 16,9%).

[a]$R_f$-Verteilung, %: $C_6$, $C_8$, $C_{10}$, $C_{12}$ = 33, 36, 23, 7.

Beispiele 53–57

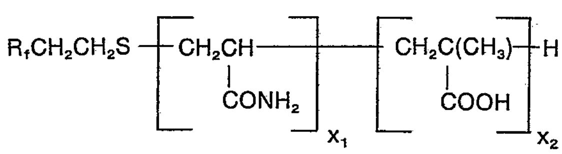

Die folgenden Materialien gibt man in dieser Reihenfolge in ein Reaktionsgefäss: Acrylamid, Methacrylamid (dies sind beides hydrophile Monomere), $R_fCH_2CH_2SH$[a], so viel Isopropylalkohol, dass sich eine Lösung mit 20% Feststoffen ergibt, und Azokatalysator wie in Beispiel 1. Dann spült man das Reaktionsgefäss mit Stickstoff durch und setzt es 20 Stunden in ein 70 °C warmes Bad ein. Die entstandenen Produkte werden 20 Stunden in ein 60 °C warmes Bad gestellt. Die so erhaltenen Produkte bringt man zur Entfernung des Lösungsmittels in einen Umlufttrockenschrank bei 60 °C und danach zur Entfernung gegebenenfalls nicht umgesetzter Monomerer in einen Vakuumtrokkenschrank.

Versuchsdaten zur Herstellung dieser oligomeren Materialien sind in Tabelle 14 angeführt. Alle Polymeren werden in 90% Ausbeute gewonnen.

Copolymere mit hohem Methacrylsäuregehalt lieferten keine stabilen Proteinschaumkonzentrate.

Tabelle 14

| Beispiel | | 53 | 54 | 55 | 56 | 57 |
|---|---|---|---|---|---|---|
| $R_fCH_2CH_2SH$[a] | Mol | 0,013 | 0,013 | 0,013 | 0,012 | 0,011 |
| Acrylamid | Mol | 0,225 | 0,247 | 0,221 | 0,120 | 0,022 |
| Methacrylsäure | Mol | 0,005 | 0,013 | 0,039 | 0,120 | 0,198 |
| IPA | Gramm | 127 | 125 | 130 | 125 | 120 |
| Azokatalysator | Gramm | 1,9 | 1,9 | 1,9 | 1,9 | 1,9 |
| $x_1$ | | 19,6 | 19 | 17 | 10 | 2 |
| $x_2$ | | 0,4 | 1 | 3 | 10 | 18 |
| % F berechnet | | 16,9 | 16,8 | 16,5 | 15,7 | 14,8 |

[a]$R_f$-Verteilung, %: $C_6$, $C_8$, $C_{10}$, $C_{12}$ = 33, 36, 23, 7

Beispiel 58

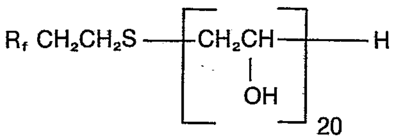

In das Reaktionsgefäss gibt man $R_fCH_2CH_2SH$ (0,007 Mol), Vinylacetat (0,140 Mol), so viel Isopropanol, dass sich 20% Feststoffe ergeben, und Azokatalysator wie in Beispiel 1 (0,01 Gew.-% auf Vinylacetat). Die Lösung wird mit $N_2$ durchgespült und 20 Stunden bei 70 °C umgesetzt. Die so erhaltene klare gelbe Lösung wird durch Zusatz von NaOH (5,6 g) hydrolysiert und 20 Stunden auf etwa 70 °C erhitzt. Die erhaltene klare orangefarbene Lösung wird dann mit Hilfe einer Vakuumpumpe getrocknet. Die %-Ausbeute beträgt 99,6.

Beispiele 59–63

Ähnlich wie in Beispielen 44–55 werden die folgenden Monomeren und Comonomeren in Oligomere überführt, wie in Tabelle 15 angeführt. Die Oligomeren werden mit der angegebenen Ausbeute gewonnen.

Tabelle 15

$R_f^cCH_2CH_2S$–(MONOMER 1)$_x$–(MONOMER 2)$_y$–H

| Beispiel | Monomer 1 | x | Monomer 2 | y | % Ausbeute | % F (berechnet |
|---|---|---|---|---|---|---|
| 59 | Diaceton-acrylamid | 20 | – | – | quant. | 8,3 |
| 60[c] | 2-Hydroxyäthylvinyläther | 10 | Maleinsäureanydrid | 10 | 86 | 13,6 |
| 61[a] | Dimethylaminopropyl-methacrylat | 10 | Butyl-methacrylat | 10 | 88 | 8,3 |
| 62 | Acrylamid | 20 | – | 0 | quant. | 16,9 |
| 63[b] | Acrylamid[b] | 20 | – | 0 | quant. | 20,6 |

[a] Konzentrat instabil.
[b] $R_f$-Verteilung, %: $C_6$, $C_8$, $C_{10}$, $C_{12-16}$ = 0,6, 11, 60, 20+
[c] $R_f$-Verteilung, %: $C_6$, $C_8$, $C_{10}$, $C_{12}$ = 33, 36, 23, 7

Beispiele 64–73

Ähnlich wie in Beispielen 46–57 werden weitere fluorierte Merkaptane als Telogene bei der Herstellung der vorliegenden Oligomeren verwendet.

Tabelle 16

| Beispiel | Merkaptan | Monomer 1 | x | Monomer 2 | x | % F (berechnet) |
|---|---|---|---|---|---|---|
| 64 | a | Acrylamid | 20 | – | – | 18,3 |
| 65 | a | Acrylamid | 50 | – | – | 8,8 |
| 66 | b | Acrylamid | 20 | – | – | 11,3 |
| 67 | b | Acrylamid | 50 | – | – | 5,1 |
| 68 | a | Acrylamid | 10 | Acrylsäure | 10 | 18,2 |
| 69 | b | Acrylamid | 10 | Acrylsäure | 10 | 11,3 |
| 70[c] | a | Acrylsäure | 3 | – | – | 46,9 |
| 71[c] | a | Acrylsäure | 5 | – | – | 39,5 |
| 72[c] | b | Acrylsäure | 3 | – | – | 35,6 |
| 73 | b | Acrylsäure | 5 | – | – | 28,3 |

[a] $(CF_3)_2CFO(CF_2CF)_{2-4}CH_2CH_2SH$
[b] $(CF_3)_2CFO\ CF_2CF_2CH_2CH_2SH$
[c] Konzentrat instabil

Verwendung der Oligomeren in Proteinschaum

Die nachfolgenden Beispiele veranschaulichen die Eignung der vorliegenden Oligomeren zur Verwendung in Proteinschaum. Neben der Verminderung der Zündfähigkeit von Brennstoff/Schaumgemischen und der Verkürzung der Feuerlöschzeit gestattet die Verwendung der Oligomeren in einer Proteinschaumgrundlage ferner eine Einstellung des Schaumausbreitungsverhältnisses und der Schaumablaufgeschwindigkeit bei Verdünnung sowohl mit Frischwasser als auch mit Meerwasser. Die ersten Beispiele zeigen die negative Auswirkung der vorbekannten Fluorchemikalien auf das Schaumausbreitungsverhältnis, die Ablaufgeschwindigkeit und die Stabilität der Verdünnung. Danach werden Beispiele der vorliegenden Oligomeren als Zusatzstoffe in Proteinschaum vorgelegt, welche den Bereich der Wirkungen auf die Schaumausbreitung und Ablaufgeschwindigkeit aufzeigen.

Zur Durchführung von Messungen des Schaumausbreitungsverhältnisses und der Ablaufgeschwindigkeit (Stabilität) verwendet man eine aus Edelstahlrohr (Durchmesser 0,64 und 0,32 cm) hergestellte Laboratoriumszweigrohrdüse, die unter 2,1 kg/cm² Stickstoffdruck mit einer Durchflussmenge von 600 ml/Minute betrieben wird. 100 ml Proteinschaumvormischung werden in einen 2 l-Messzylinder mit konischem Boden geschäumt. Die Schaumausbreitungsverhältnisse werden mit einer Genauigkeit von ± 0,2 aus dem Volumenverhältnis des erzeugten Schaums zum Volumen der eingesetzten Vormischung berechnet. Die Ablaufgeschwindigkeiten sind als die Zeit in Minuten mit einer Genauigkeit von ± 0,2 Minuten ausgedrückt, die erforderlich ist, um 25% des ursprünglichen Vormischungsvolumens im konischen Boden des Messzylinders zu sammeln.

Dieser Wert wird als Viertelablaufzeit oder Q.D.T. [quarter drain time] bezeichnet.

Die Schaumausbreitungsverhältnis- und Ablaufgeschwindigkeitsdaten werden in den nachfolgenden Tabellen in Form von Δ-Werten dargestellt, welche die Grösse und Richtung der Wirkung der vorliegenden Oligomeren auf Proteinschaum äusserst deutlich zeigen. Somit bedeutet eine Δ-Ausbreitung von + 1,1, dass das Ausbreitungsverhältnis des Proteinschaums mit dem vorliegenden Zusatzstoff 1,1 Einheiten grösser ist als das Proteinschaumausbreitungsverhältnis in Abwesenheit eines Zusatzstoffs.

Vorbekannte Fluorchemikalien in Proteinschaum
Beispiele 74–85

Die nachfolgende tabellarische Aufstellung zeigt, dass herkömmliche, dem Stand der Technik bekannte fluorchemische Tenside die Proteinschaumausbreitung und Ablaufgeschwindigkeit beeinträchtigen. Das Tensid wird jeweils in der Proteingrundlage (3%) auf 0,3% F aufgelöst und bei 3%-Verdünnung in Meerwasser untersucht.

Tabelle 17

| Beispiel | $R_f$Tensid[b] | Meerwasser Δ-Ausbreitung | ΔQDT |
|---|---|---|---|
| 74 | LODYNE S-112 | −4,3 | −6,0 |
| 75 | Zonyl FSN | −7,7 | – |
| 76 | Zonyl FSE | −3,5 | −2,5 |
| 77 | Zonyl FSA[a] | −1,1 | −0,7 |
| 78 | Zonyl FSB | −5,5 | – |
| 79 | Monflor 31 | −3,3 | −2,7 |
| 80 | Monflor 52 | −5,8 | – |
| 81 | Fluorad FC-95 | −2,8 | −2,6 |
| 82 | Fluorad FC-170 | −7,6 | – |
| 83 | Fluorad FC-172 | −4,5 | – |
| 84 | Fluorad FC-128 | −3,8 | −3,6 |
| 85 | FT 248 | −3,4 | −3,2 |

[a] Schlechte Konzentratsstabilität.

[b] Die folgenden handelsüblichen Tenside werden in den Beispielen verwendet:
FC-95, ein Alkalisalz einer Perfluoralkylsulfonsäure.
FC-128, ein Perfluoralkansulfonamidoalkylenmonocarbonsäuresalz wie in U.S. Patentschrift Nr. 2 809 990 beschrieben.
FC-170, ein nicht-ionogenes Perfluoralkansulfonamidopolyalkylenoxydderivat.
FC-172, ein amphoteres Perfluoralkylcarboxylat.
Zonyl FSA, ein von linearen Perfluoralkyltelomeren abgeleitetes anionaktives Tensid.
Zonyl FSB, ein amphoteres, von linearen Perfluoralkyltelomeren abgeleitetes Carboxylat.
Zonyl FSN, ein von linearen Perfluoralkyltelomeren abgeleitetes nicht-ionogenes Tensid.
Zonyl FSE, ein anionaktives langkettiges Fluorkohlenstoffderivat.
Monflor 31, ein von verzweigten Tetrafluoräthylenoligomeren abgeleitetes anionen-aktives Tensid, wie in der britischen Patentschrift Nr. 1 148 486 offenbart.
Monflor 52, ein von verzweigten Tetrafluoräthylenoligomeren abgeleitetes nicht-ionogenes Tensid, wie in den britischen Patentschriften Nr. 1 130 822, 1 176 492 und 1 155 607 offenbart.
FT 248, $C_8F_{17}SO_3^- \overset{+}{N}(C_2H_5)_4$
Lodyne S-112, eine Zusammensetzung aus einem anionaktiven $R_f$-Sensid und einem $R_f$-synergisten, wie in US-A-4 089 804 beschrieben.

Beispiele 86–93

Die nachfolgenden Beispiele veranschaulichen die bei der Schaumausbreitung eines herkömmlichen 3%igen regulären Proteinschaums durch den Zusatz verschiedener Mengen der in Beispielen 37 und 38 beschriebenen Oligomeren erzielbare Verbesserung.

Tabelle 18

Wirkung eines Oligomerzusatzes auf die Schaumausbreitung bei Verdünnung mit 3% Leitungswasser bzw. 3% Meerwasser

| Beispiele | % Aktivstoffe in Proteinschaum: Im Konzentrat | % Aktivstoffe in Proteinschaum: In 3%iger Verdünnung | Δ Ausbreitung Beispiel 37 L[b] | Δ Ausbreitung Beispiel 37 M[c] | Δ Ausbreitung Beispiel 38 L[b] | Δ Ausbreitung Beispiel 38 M[c] |
|---|---|---|---|---|---|---|
| 86 | 0,00 | 0,00 | 5,3[a] | 6,1[a] | 5,3[a] | 6,1[a] |
| 87 | 0,02 | 0,0006 | 0 | +0,3 | – | – |
| 88 | 0,13 | 0,0033 | +0,8 | +1,1 | – | – |
| 89 | 0,20 | 0,006 | – | – | +1,2 | +1,1 |
| 90 | 0,27 | 0,008 | +0,9 | +1,7 | – | – |
| 91 | 0,50 | 0,015 | +1,0 | +1,9 | +1,5 | +1,7 |
| 92 | 1,00 | 0,03 | +1,3 | +2,1 | +1,9 | +1,6 |
| 93 | 1,50 | 0,045 | – | – | +1,4 | +1,2 |

[a] Gemessene eigentliche Ausbreitungsverhältnisse.
[b] Leitungswasser
[c] Meerwasser

Beispiele 94–99

Die Beispiele unten in Tabelle 19 veranschaulichen die Eigenstabilität der vorliegenden Oligomeren in Proteinschaumverdünnungen gegen Schnellalterung bei 60 °C gegenüber vorbekannten, fluorchemisches Tensid enthaltenden Zusammensetzungen.

Tabelle 19

| Beispiel | Proteingrundlage | Zusätze (% Aktivstoffe) | Δ Ausbreitung[a] anfänglich | Δ Ausbreitung[a] gealtert | Alterungszeit (Tage) |
|---|---|---|---|---|---|
| 94 | Aer-o-Foam 3% Reg. (National Foam. Inc.) | ohne | (6,1[c]) | (6,4[d]) | 6 |
| 95 | Aer-o-Foam 3% Reg. (National Foam. Inc.) | MD 313 (1,5% wie geliefert (I C I) | −1,8 | −2,1 | 6 |
| 96 | Aer-o-Foam 3% Reg. (National Foam. Inc.) | LODYNE S-100[e] (0,7%) | −1,1 | −2,8 | 10 |
| 97 | Aer-o-Foam 3% Reg. (National Foam. Inc.) | b | +2,3 | +1,1 | 10 |
| 98 | Aer-o-Foam 3% Reg. (National Foam. Inc.) | Beispiel 37 (1%) | +2,1 | +1,7 | 10 |
| 99 | Aer-o-Foam 3% Reg. (National Foam. Inc.) | Beispiel 38 (1,5%) | +0,9 | +1,9 | 10 |

[a] Bei 3% Gebrauchsverdünnung in Meerwasser.
[b] Ähnlich wie Beispiele 36–40, aber mit n=8.
[c] Gemessenes anfängliches Schaumausbreitungsverhältnis.
[d] Gemessenes gealtertes Schaumausbreitungsverhältnis.
[e] Amphoteres fluoriertes Tensid.

Beispiele 100–104

Die unten in Tabelle 20 angeführten Ergebnisse zeigen die Auswirkungen der $R_f$-Kettenlänge auf das Schaumausbreitungsverhältnis von Proteinschaum sowie die Auswirkungen einer Änderung des Wertes von x auf das Schaumausbreitungsverhältnis von Proteinschaum. Die Messungen werden an 3%igen Frischwasserverdünnungen von AER-O-FOAM 3% REGULAR (National Foam) durchgeführt.

Tabelle 20 Auswirkung der $R_f$-Länge und des Wertes von x auf die Proteinschaumausbreitung

| Beispiel | Zusatzstoff | $R_f$ | x | Δ Ausbreitung |
|---|---|---|---|---|
| 100 | Beispiel 41 | $C_6F_{13}$ | 15 | −2,2 |
| 101 | Beispiel 42 | $C_8F_{17}$ | 15 | +1,9 |
| 102 | Beispiel 36 | $C_6$:$C_8$:$C_{10}$:$C_{12}$ 33:38:23:5 | 5 | −1,7 |
| 103 | Beispiel 37 | $C_6C_8C_{10}C_{12}$ 33:38:23:5 | 10 | −0,4 |
| 104 | Beispiel 38 | $C_6C_8C_{10}C_{12}$ 33:38:23:5 | 15 | +0,7 |

Beispiele 105–123

Die Tabelle 21 unten zeigt ferner die Verwendbarkeit der vorliegenden Oligomeren zur Einstellung des Schaumausbreitungsverhältnisses und der QDT-Werte von Proteinschaumzusammensetzungen.

Die nachfolgenden Beispiele zeigen die durch ihre Oberflächenaktivität bedingte Brauchbarkeit der Oligomeren für andere Anwendungszwecke als Proteinschaum.

Beispiele 124–131

Man mischt eine wässrige Anstrichformulierung (40,9% Feststoffe) zusammen, die aus 28,6 Teilen wasserlöslichem, vernetzbarem Harz, das Polyäthylenoxydsegmente als wasserlöslichmachende Einheiten enthält und sich von Diepoxiden ableitet, 15,4 Teilen (80% Feststoffe in Isopropanol) eines vernetzenden Melaminharzes und 56 Teilen Wasser besteht. Dieses wässrige Harz wird mit einem Wickeldrahtstab Nr. 7 auf elektrolytisch verzinntes Blech aufgetragen, das von der Verarbeitung her noch mit einer kohlenwasserstoffartigen öligen Schicht verunreinigt und besonders schwer benetzbar ist. Die Proben werden 10 Minuten bei 200 °C in einem Umluftofen gehärtet.

Um die Benetzung zu verbessern, werden oberflächenaktive Verbindungen in die Formulierung eingearbeitet, und dies wird optisch beurteilt und als Prozent bedeckter Oberfläche ausgedrückt. Die Ergebnisse sind unten in der Tabelle angegeben.

Tabelle 21

Auswirkungen von Oligomerbeispielen auf das Schaumausbreitungsverhältnis in Meerwasser und den QDT-Wert von Proteinschaum

| Beispiel | Zusatzstoff Beispiel | Δ-Ausbreitung | Δ QDT |
|---|---|---|---|
| 105 | 11 | −0,7 | −3,9 |
| 106 | 46 | 0 | −1,8 |
| 107 | 47 | −1,4 | −1,8 |
| 108 | 48 | −0,7 | −1,5 |
| 109 | 50 | 0 | +0,7 |
| 110 | 51 | 0 | +0,7 |
| 111 | 53 | +1,1 | −3,5 |
| 112 | 54 | +0,9 | −2,2 |
| 113 | 55 | +1,1 | −1,6 |
| 114 | 56 | +0,7 | −0,2 |
| 115 | 57 | +0,8 | 0 |
| 116 | 60 | 0 | 0 |
| 117 | 61 | +0,5 | −0,4 |
| 118 | 62 | +2,7 | −2,0 |
| 119 | 63 | +0,5 | +0,2 |
| 120 | 64 | +0,4 | −1,7 |
| 121 | 65 | +1,5 | −0,4 |
| 122 | 68 | +1,0 | +0,3 |
| 123 | 70 | 0 | −0,3 |

Tabelle 22

| Bsp. | Chemischer Typ des Zusatzes | Zusatz, % auf Feststoffe* | % Bedeckung nach der Härtung | Bemerkungen |
|---|---|---|---|---|
| 124 | Blindversuch, ohne | – | 25 | gerändert |
| 125 | Beispiel 32 | 0,55 | 85 | rauh gekräuselt |
| 126 | Beispiel 33 | 0,70 | 95 | schwach gekräuselt |
| 127 | Beispiel 34 | 0,86 | 100 | glatt |
| 128 | Beispiel 35 | 1,03 | 100 | glatt |
| 129 | nicht-ionogener Kohlenwasserstoff (Pluronic L-72) | 1,0 | 50 | |
| 130 | Silikon (BYK-301) | 1,0 | 75 | |
| 131 | nicht-ionogen fluoriert (FC-430) | 1,0 | 60 | |

* 10%ige Lösung oder Emulsion des Zusatzstoffs wird zur Formulierung gegeben, damit sich die angegebenen % Zusatz auf Feststoffe ergeben.

Nur die neuartigen erfindungsgemässen Oligomeren (Beispiele 125–128), insbesondere Beispiele 127–128, verhindern weitgehend eine Verkleinerung der bedeckten Fläche während der Härtung.

Beispiele 132–140

Nach der Arbeitsweise der Beispiele 124–131 werden weitere erfindungsgemässe oligomere Zusatzstoffe zur Verbesserung der Benetzung von gehärteten Epoxiüberzügen eingesetzt, wie aus Tabelle 23 ersichtlich.

Tabelle 23

| Bsp. | Chemischer Typ des Zusatzes | Zusatz, % auf Feststoffe* | % Bedeckung nach der Härtung | Bemerkungen |
|---|---|---|---|---|
| 132 | Blindversuch, ohne | – | 10 | sehr schlecht |
| 133 | Beispiel 25 | 0,36 | 100 | glatt |
| 134 | Beispiel 26 | 0,34 | 100 | gut, wenige rauhe Stellen |
| 135 | Beispiel 27 | 0,31 | 100 | einige Runzeln |
| 136 | Beispiel 28 | 0,29 | 100 | Runzeln |
| 137 | Beispiel 29 | 0,19 | 80 | viele Poren |
| 138 | Beispiel 30 | 0,31 | 85 | viele Poren |
| 139 | Beispiel 31 | 0,42 | 90 | viele Poren |
| 140 | Beispiel 31 mit amphoterem Fluoriertem Tensid (Lodyne S-100) | 0,21<br>0,03 | 60 | schlecht |

* 10%ige Lösung oder Emulsion des Zusatzstoffs wird zur Formulierung gegeben, damit sich die angegebenen % Zusatz auf Feststoffe ergeben.

Die Oligomeren aus Beispielen 25–31 ergaben auch eine verbesserte Bedeckung von gehärteten Epoxiüberzügen. Der gehärtete Überzug mit Beispiel 25 ist besonders gut.

Beispiele 141–144

Nach der Arbeitsweise von Beispiel 124–131 werden noch weitere Oligomere als Zusatzstoffe zur Verbesserung der Bedeckung von Epoxiüberzügen ausgewertet, wie aus Tabelle 24 ersichtlich.

Tabelle 24

| Bsp. | Chemischer Typ des Zusatzes | Zusatz, % auf Feststoffe* | % Bedeckung nach der Härtung | Bemerkungen |
|---|---|---|---|---|
| 141 | Blindversuch, ohne | – | 10 | sehr schlecht |
| 142 | Beispiel 18 | 0,30 | 10 | gerändert |
| 143 | Beispiel 19 | 0,46 | 50 | schlecht |
| 144 | Beispiel 20 | 0,61 | 80 | viel kleine Poren |
| 145 | Beispiel 20 mit amphoterem fluoriertem Tensid (Lodyne S-100) | 0,31<br>0,30 | 85 | einige Poren und Streifen |

* 10%ige Lösung oder Emulsion des Zusatzstoffs wird zur Formulierung gegeben, damit sich die angegebenen % Zusatz auf Feststoffe ergeben.

Beispiele 145–148

Unter Verwendung eines Versuchsreinigungsmittels für harte Oberflächen (z.B. Bohnerwachs) werden erfindungsgemässe Oligomere der Bohnerwachsformulierung zugesetzt, um die Ausbreitungs- und Verlaufeigenschaften zu verbessern.

Man vermischt die Oligomerzusatzstoffe mit dem Reinigungsmittel auf 0,05% F in Lösung. Mit einer Spritze bringt man eine 25 ml-Probe der Formulierung auf einen 0,127 mm dicken Bogen Aluminiumfolie. Den Tropfen lässt man 5 Minuten stehen, misst danach den Durchmesser des Tropfens und berechnet die bedeckte Fläche. Hohe Zahlen für die Fläche weisen auf verbesserte Ausbreitungs- und Verlaufeigenschaften hin. Die Ergebnisse sind in Tabelle 25 angeführt.

Tabelle 25

| Bsp. | Chemischer Typ des Zusatzstoffs | % F in der Formulierung | Berechnete Tropfenfläche in mm² | Verlaufsbewertung* |
|---|---|---|---|---|
| 145 | Blindversuch, ohne | – | 70,9 | 8 |
| 146 | Beispiel 19 | 0,05 | 100,3 | 1 |
| 147 | Beispiel 37 | 0,05 | 100,3 | 4 |
| 148 | Amphoteres fluoriertes Tensid (Lodyne S-100) | 0,05 | 95,0 | 2 |

* Verlaufsbewertung = subjektive optische Beobachtung des getrockneten Tropfens, wobei 1 = am besten (am glattesten und bester Verlauf); 8 = am schlechtesten (hohe Rippe um den Tropfen herum, unbedeckte Fläche in der Mitte).

**Patentansprüche**

1. Oligomere der Formel

$$R_f\text{–E–S–}[M_1]\text{–}_x\text{–}[M_2]\text{–}_yH$$

worin $R_f$ geradkettiges oder verzweigtes Perfluoralkyl mit 4 bis 18 Kohlenstoffatomen, Perfluoralkyloxyalkylen mit 5 bis 19 Kohlenstoffatomen oder Gemische davon darstellt, E geradkettiges oder verzweigtes Alkylen mit 1 bis 12 Kohlenstoffatomen, $-CON(R')-E'-$, $-SO_2N(R')-E'-$, $-E''-CON(R')-E'-$, $-E''-S-E'$, $-E''-N(R')-E'-$ oder $-E''-SO_2N(R')-E'-$ bedeutet, wobei R' für Wasserstoff oder Alkyl mit 1 bis 6 Kohlenstoffatomen, E' für Alkylen mit 2 bis 8 Kohlenstoffatomen sind E'' für Alkylen mit 1 bis 4 Kohlenstoffatomen stehen, $-[M_1]-$ eine von einem hydrophilen Vinylmonomeren abgeleitete hydrophile Monomereinheit und $-[M_2]-$ eine von einem hydrophoben Vinylmonomeren abgeleitete hydrophobe Monomereinheit darstellen sowie x eine ganze Zahl von 4 bis 500 und y null oder eine ganze Zahl bis 250 sind, wobei die Summe von x und y 4 bis 500 beträgt und $\frac{x}{x+y}$ zwischen 1 und 0,5 liegt.

2. Oligomere nach Anspruch 1, dadurch gekennzeichnet, dass die Summe von x und y 10 bis 200 beträgt.

3. Oligomere nach Anspruch 1 oder 2, dadurch gekennzeichnet, dass y 0 ist.

4. Oligomere nach Anspruch 1, dadurch gekennzeichnet, dass $R_f$ geradkettiges oder verzweigtes Perfluoralkyl mit 6 bis 14 Kohlenstoffatomen, E Äthylen und $-[M_1]-$

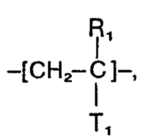, 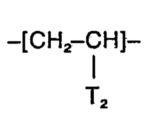 oder 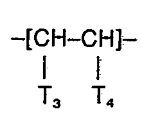

darstellen, worin

$T_1$ für $-COOMe$, $-CONH_2$, $-CONHR_2$, $-CONR_2R_3$, $-CONH-E_1-NR_2R_3$, $-CONH-E_1-NR_2R_3R_4X$, $-CONH-CH_2OH$, $-CONHCH_2OR_2$, $-CONHE_2OH$, $-CO(OE_1)_n-OR_1$, $-COOCH_2CHOHCH_2OH$, $-CONH-E_2-SO_3Me$ oder $-CON(E_1OH)_2$,

$T_2$ für $-OH$, $-OE_2OR_1$, $-(OE_1)_nOR_1$, $-SO_3Me$, $-C_6H_4SO_3Me$,

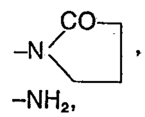,

$-NH_2$,

Pyridiniumhalogenid, $-NHCOR_1$ oder $-NH_2$,

$T_3$ und $T_4$ unabhängig voneinander für $-COOMe$, $-CONH_2$, $-CO(OE_1)_nOR_1$, $-CONH-E_1-OH$, oder $-CON(E_1-OH)_2$,

$R_1$ für Wasserstoff oder Methyl,

$R_2$, $R_3$ und $R_4$ unabhängig voneinander für Alkyl mit 1 bis 6 Kohlenstoffatomen,

$E_1$ für Alkylen mit 2 oder 3 Kohlenstoffatomen,

$E_2$ für Alkylen mit 2 bis 6 Kohlenstoffatomen,

Me für Wasserstoff oder Alkalimetall,

X für Halogenid und

n für 1 bis 20 stehen, und $-[M_2]-$

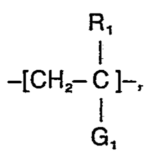, 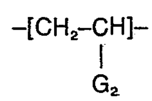 oder 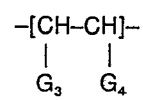

darstellt, worin

$G_1$ für $-COOR_5$, $-OCOR_2$, $-CN$, $-OR_5$, $-C_6H_5$ oder $-C_6H_4X$,

$G_2$ für Wasserstoff, $R_2$ oder Halogenid sowie

$G_3$ und $G_4$ unabhängig voneinander für $-COOR_5$ stehen oder zusammen $-CO-O-CO-$ bedeuten können,

$R_1$, $R_2$ und X die oben angegebene Bedeutung haben und

$R_5$ für Alkyl mit 1 bis 18 Kohlenstoffatomen oder Cycloalkyl, Aryl oder Alkenyl mit 6 bis 18 Kohlenstoffatomen steht, wobei die Summe von x und y 4 bis 500 beträgt und $\frac{x}{x+y}$ zwischen 0,5 und 1 liegt.

5. Oligomere nach Anspruch 1, der Formel

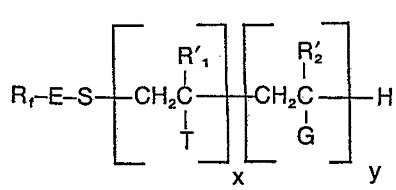

worin $R_f$ geradkettiges oder verzweigtes Perfluoralkyl mit 6 bis 14 Kohlenstoffatomen, E $-CH_2CH_2-$, $R'_1$ und $R'_2$ unabhängig voneinander Wasserstoff oder Methyl sowie T und G unabhängig voneinander je $-CONH_2$, $-COOH$,

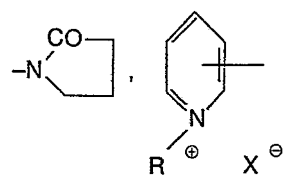

$-COO-E'_1-OH$, $-CONH-E'_1-SO_3H$, $-CONH-CH_2OR'_7$, $-COOCH_2CHOHCH_2N^{\oplus}R'_4R'_5R'_6X^{\ominus}$ und $-CONHE'_1NR'_4R'_5$ darstellen, wobei R für Methyl oder Äthyl, X für Chlorid oder Bromid, $E'_1$ für geradkettiges oder verzweigtes Alkylen mit 1 bis 3 Kohlenstoffatomen, $R'_4$, $R'_5$ und $R'_6$ unabhängig voneinander für Alkyl mit 1 bis 4 Kohlenstoffatomen und $R'_7$ für Wasserstoff oder Alkyl mit 1 bis 4 Kohlenstoffatomen stehen, mit $x+y = 5$ bis 500.

6. Oligomere nach Anspruch 4, der Formel $R_f-E-[M_1]-_xH$, dadurch gekennzeichnet, dass $R_f$ geradkettiges oder verzweigtes Perfluoralkyl mit 6 bis 14 Kohlenstoffatomen, E Äthylen und $-[M_1]-$

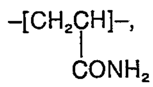, 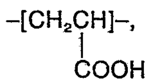, 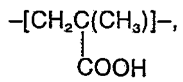,

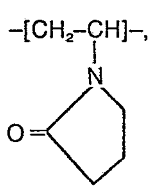, 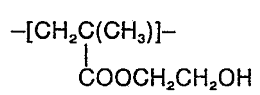

und/oder 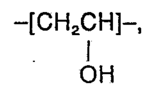,

darstellen sowie x 5 bis 250 beträgt.

7. Oligomere nach Anspruch 6, dadurch gekennzeichnet, dass $R_f$ für Perfluoralkyl mit 6 bis 12 Kohlenstoffatomen steht.

8. Oligomere nach Anspruch 4, dadurch gekennzeichnet, dass x plus y 10 bis 200 beträgt.

9. Oligomere nach Anspruch 6, dadurch gekennzeichnet, dass x plus y 10 bis 200 beträgt.

10. Oligomere nach Anspruch 9, dadurch gekennzeichnet, dass x plus y 15 bis 50 beträgt.

11. Oligomere nach Anspruch 6, dadurch gekennzeichnet, dass $R_f$ geradkettiges Perfluoralkyl mit 6 bis 12 Kohlenstoffatomen, E Äthylen, $-[M_1]-$

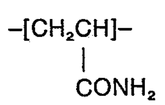

sowie x 5 bis 100 darstellen.

12. Verfahren zur Herstellung von Oligomeren nach Anspruch 1, dadurch gekennzeichnet, dass man ein oder mehrere hydrophile Monomere des Typs $M_1$, gegebenenfalls mit einem oder mehreren Monomeren des Typs $M_2$, in Gegenwart eines $R_f$-Merkaptans der Formel $R_f-E-SH$, worin $R_f$ und E die in Anspruch 1 angegebene Bedeutung haben, polymerisiert.

13. Verfahren nach Anspruch 12, dadurch gekennzeichnet, dass die Polymerisation in einem weitgehend wasserfreien Reaktionsmedium bei Temperaturen zwischen 20 und 100 °C erfolgt.

14. Verfahren nach einem der Ansprüche 12 und 13, dadurch gekennzeichnet, dass die Polymerisation in Gegenwart von 0,01 bis 0,5 Gew.-%, bezogen auf die Monomeren, eines Radikalinitiators erfolgt.

15. Verwendung der Oligomeren nach einem der Ansprüche 1 bis 11 zur Herabsetzung der Oberflächenspannung für wässrige Systeme oder als Zusatzstoffe für proteinschaumartige Feuerlöschzusammensetzungen.

16. Wässrige schaumbildende Proteinhydrolysatkonzentrate zur Bildung von Feuerlöschschaum nach etwa 15- bis etwa 35facher Volumenverdünnung mit Wasser, dadurch gekennzeichnet, dass sie eine wässrige Proteinhydrolysatlösung, die genügend Proteinhydrolysat enthält, um den nach dem Verdünnen gebildeten Schaum nahezu vollständig zu stabilisieren, und ein Oligomer nach einem der Ansprüche 1 bis 11 in gelöster oder dispergierter Form einer solchen Konzentration enthalten, dass sich nach der Verdünnung ein Gehalt von etwa 0,003 bis etwa 0,3 Gew.-% dieses Oligomeren ergibt.

17. Verfahren zum Löschen einer brennenden hydrophoben Flüssigkeit in einem Lagertank oder Behälter, dadurch gekennzeichnet, dass man unter die Oberfläche der brennenden Flüssigkeit einen wässrigen Schaum einbringt, der dann zur Oberfläche dieser Flüssigkeit steigt, wobei dieser Schaum aus einer wässrigen Proteinhydrolysatlösung einer genügenden Konzentration, um den Schaum nahezu vollständig zu stabilisieren, hergestellt wird und diese wässrige Lösung ferner etwa 0,003 bis 0,3 Gew.-% eines Oligomeren nach einem der Ansprüche 1 bis 11 enthält.

18. Verfahren nach Anspruch 17, dadurch gekennzeichnet, dass man zum Löschen des Feuers ein Pulverlöschmaterial auf den brennbaren Stoff und danach einen aus einer wässrigen Proteinhydrolysatlösung hergestellten wässrigen Schaum auf die Oberfläche des brennbaren Stoffes aufbringt, um dessen Wiederentflammung an heissen Flächen zu verhindern, wobei die wässrige Proteinhydrolysatlösung in einer solchen Menge eingesetzt wird, um den Schaum nahezu vollständig zu stabilisieren und wobei diese wässrige Lösung ferner etwa 0,003 bis 0,3 Gew.-% eines Oligomeren nach einem der Ansprüche 1 bis 11 enthält.

## Claims

1. An oligomer of the formula

$$R_f-E-S-[M_1]-_x-[M_2]-_yH$$

wherein $R_f$ is a straight or branched chain perfluoralkyl of 4 to 18 carbon atoms, perfluoroalkyloxyalkylene of 5 to 19 carbon atoms, or mixtures

thereof, E is a straight or branched chain alkylene of 1 to 12 carbon atoms, $-CON(R')-E'-$, $-SO_2N(R')-E'-$, $-E''-CON(R')-E'-$, $-E''-S-E'-$, $-E''N(R')-E$; or $-E''-SO_2N(R')-E'-$, where R' is hydrogen or alkyl of 1 to 6 carbon atoms, E' is alkylene of 2 to 8 carbon atoms and E'' is alkylene of 1 to 4 carbon atoms; $-[M_1]-$ represents a hydrophilic monomer unit derived from a hydrophilic vinyl monomer and $-[M_2]-$ represents a hydrophobic monomer unit derived from hydrophobic vinyl monomer, x is an integer of 4 to 500, y is zero or an integer of up to 250, the sum of x and y is between 4 and 500; and $\frac{x}{x+y}$ is between 1 and 0.5.

2. An oligomer according to claim 1, wherein the sum of x and y is between 10 and 200.

3. An oligomer according to claim 1 or 2, wherein y is 0.

4. An oligomer according to claim 1 of the formula wherein

$R_f$ is a straight or branched chain perfluoroalkyl of 6 to 14 carbon atoms, E is ethylene

$-[M_1]-$ is 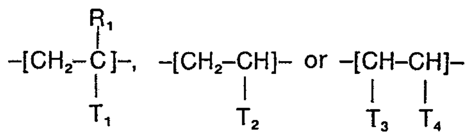

wherein

$T_1$ is $-COOMe$; $-CONH_2$; $-CONHR_2$; $-CONR_2R_3$; $-CONH-E_1-NR_2R_3$; $-CONH-E_1-NR_2R_3R_4X$; $-CONH-CH_2OH$; $-CONHCH_2OR_2$; $-CONHE_2OH$; $-CO(OE_1)_n-OR_1$; $-COOCH_2CHOHCH_2OH$; $-CONH-E_2-SO_3Me$; $-CON(E_1OH)_2$

$T_2$ is $-OH$; $-OE_2OR_1$; $-(OE_1)_nOR_1$; $-SO_3Me$; $-C_6H_4SO_3Me$;

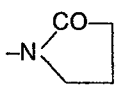,

pyridinium halide, $-NHCOR_1$, $-NH_2$

$T_3$ & $T_4$ are independently $-COOMe$; $-CONH_2$; $-CO(OE_1)_nOR_1$; $-CONH-E_1-OH$; $-CON(E_1-OH)_2$

$R_1$ is hydrogen or methyl,

$R_2$, $R_3$, $R_4$ are independently alkyl with 1 to 6 carbon atoms,

$E_1$ is alkylene with 2 or 3 carbon atoms,

$E_2$ is alkylene with 2 to 6 carbon atoms,

Me is hydrogen or alkali metal,

X is halide,

n is 1 to 20

$-[M_2]-$ is 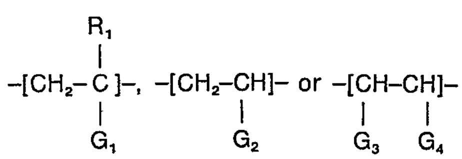

wherein

$G_1$ is $-COOR_5$; $-OCOR_2$; $-CN$; $-OR_5$; $-C_6H_5$; $-C_6H_4X$

$G_2$ is hydrogen, $R_2$ or halide

$G_3$ and $G_4$ are independently $-COOR_5$ or combined can be $-CO-O-CO-$

$R_1$, $R_2$, X are as previously defined

$R_5$ is alkyl with 1 to 18 carbon atoms, or cycloalkyl, aryl or alkenyl with 6 to 18 carbon atoms the sum of x and y is between 4 and 500; and $\frac{x}{x+y}$ is between 0.5 and 1.

5. An oligomer according to claim 1 of the formula

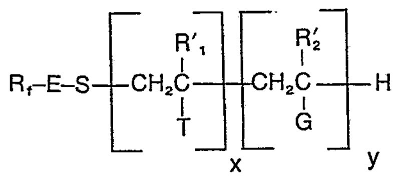

wherein

$R_f$ is a straight or branched chain perfluoroalkyl of 6 to 14 carbon atoms,

E is $-CH_2CH_2-$

$R'_1$ and $R'_2$ are independently hydrogen or methyl,

T and G are each independently $-CONH_2$, $-COOH$,

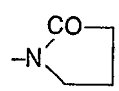, 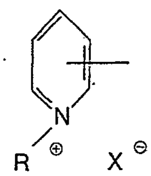

$-COO-E_1'-OH$, $-CONH-E'_1-SO_3H$, $-CONHCH_2OR'_7$, $-COOCH_2CHOHCH_2{}^{\oplus}NR'_4R'_5R'_6X^{\ominus}$ and $-CONHE'_1NR'_4R'_5$ where R is methyl or ethyl; X is chloride or bromide; $E'_1$ is straight or branched chain alkylene of 1 to 3 carbon atoms; $R'_4$, $R'_5$ and $R'_6$ are independently alkyl of 1 to 4 carbon atoms $R'_7$ is hydrogen or alkyl of 1 to 4 carbon atoms, and $x+y = 5$ to 500.

6. An oligomer according to claim 4 of the formula $R_f-E-[M_1]-_x H$, wherein $R_f$ is a straight or branched chain perfluoroalkyl of 6 to 14 carbon atoms, E is ethylene

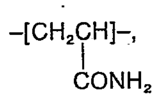, 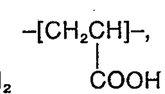, 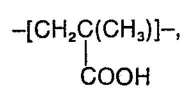,

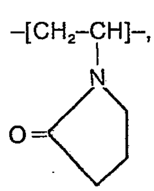, 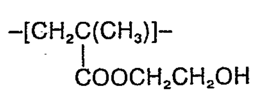

and/or 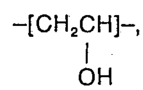,

and x is 5 to 250.

7. An oligomer according to claim 6 wherein $R_f$ is perfluoroalkyl of 6 to 12 carbon atoms.

8. An oligomer according to claim 4, wherein x plus y are between 10 and 200.

9. An oligomer according to claim 6, wherein x plus y are between 10 and 200.

10. An oligomer according to claim 9, wherein x plus y are between 15 and 50.

11. An oligomer according to claim 6, wherein $R_f$ is a straight chain perfluoroalkyl of 6 to 12 carbon atoms, E is ethylene, $-[M_1]-$ is

$$-[CH_2\underset{\displaystyle CONH_2}{\underset{|}{C}H}]-$$

x is 5 to 100.

12. Process for the manufacture of an oligomer according to claim 1, which comprises polymerizing a hydrophilic monomer or monomers of the type $M_1$ optionally with a monomer or monomers of the type $M_2$ in the presence of an $R_f$-mercaptan of formula $R_f$–E–SH, wherein $R_f$ and E are as defined in claim 1.

13. Process according to claim 12 which comprises carrying out the polymerisation in a essentially water free reaction medium at temperatures between 20 and 100 °C.

14. Process according to any one of claims 12 and 13 which comprises carrying out the polymerisation in the presence of 0.01 to 0.5% by weight, relative to the monomers, of a free-radical initiator.

15. Use of the oligomers according to any one of claims 1 to 11 as surface tension depressants for aqueous systems or as additives to protein foam type fire fighting compositions.

16. A protein hydrolyzate aqueous foam-forming concentrate composition for making a fire-fighting foam after dilution with from about 15 to about 35 times its volume of water which comprises a water solution of a protein hydrolyzate containing sufficient protein hydrolyzate to essentially completely stabilize the foam produced after dilution, and in dissolved or dispersed condition an oligomer of any one of claims 1 to 11 in a concentration to give from about 0.003 to about 0.3% by weight of said oligomer after dilution.

17. A process for extinguishing a burning hydrophobic liquid in a storage tank or containing vessel which comprises introducing beneath the surface of the burning liquid an aqueous foam, which foam then rises to the surface of said liquid, said foam being prepared from an aqueous solution of a protein hydrolyzate in a concentration sufficient to essentially completely stabilize the foam, said aqueous solution also containing from about 0.003 to 0.3% by weight of an oligomer according to any one of claims 1 to 11.

18. A process according to claim 17 which comprises applying a dry powder extinguishing material to a combustible material to extinguish the fire and then applying an aqueous foam being prepared from an aqueous solution of a protein hydrolyzate in a concentration sufficient to essentially completely stabilize the foam, said aqueous solution also containing from about 0.003 to 0.3% by weight of an oligomer according to any one of claims 1 to 11 to the surface of the combustible material to prevent reignition of said material by hot surfaces.

**Revendications**

1. Oligomères de formule

$$R_f\text{–E–S–}[M_1]\text{–}_x\text{–}[M_2]\text{–}_yH$$

dans laquelle $R_f$ est un groupe perfluoroalkyle à chaîne droite ou ramifiée ayant 4 à 18 atomes de carbone, un groupe perfluoroalkyloxyalkylène ayant 5 à 19 atomes de carbone ou des mélanges de ces groupes; E est un groupe alkylène à chaîne droite ou ramifiée ayant 1 à 12 atomes de carbone, $-CON(R')-E'-$, $-SO_2N(R')-E'-$, $E''-CON(R')-E'-$, $-E''-S-E'-$, $-E''-N(R')-E'-$ ou $-E''-SO_2N(R')-E'-$ où R′ est un atome d'hydrogène ou un groupe alkyle ayant 1 à 6 atomes de carbone; E′ est un groupe alkylène ayant 2 à 8 atomes de carbone, et E″ est un groupe alkylène ayant 1 à 4 atomes de carbone; $-[M_1]-$ est un motif monomère hydrophile dérivé d'un monomère vinylique hydrophile et $-[M_2]-$ est un motif monomère hydrophobe dérivé d'un monomère vinylique hydrophobe, et x est un nombre entier de 4 à 500 et y est zéro ou un nombre entier allant jusqu'à 250, la somme de x et y étant de 4 à 500, et $\frac{x}{x+y}$ étant compris entre 1 et 0,5.

2. Oligomères selon la revendication 1, caractérisés par le fait que la somme de x et y va de 10 à 200.

3. Oligomères selon la revendication 1 ou 2, caractérisés par le fait que y est 0.

4. Oligomères selon la revendication 1, caractérisés par le fait que $R_f$ est un groupe perfluoroalkyle à chaîne droite ou ramifiée ayant 6 à 14 atomes de carbone; E est un groupe éthylène et $-[M_1]-$ est

$$-[CH_2-\overset{\displaystyle R_1}{\underset{\displaystyle T_1}{C}}]-,\quad -[CH_2-\underset{\displaystyle T_2}{CH}]-\ \text{ou}\ -[\underset{\displaystyle T_3}{CH}-\underset{\displaystyle T_4}{CH}]-$$

dans laquelle:

$T_1$ est $-COOMe$, $-CONH_2$, $-CONHR_2$, $-CONR_2R_3$, $-CONH-E_1-NR_2R_3$, $-CONH-E_1-NR_2R_3R_4X$, $-CONH-CH_2OH$, $-CONHCH_2OR_2$, $-CONHE_2OH$, $-CO(OE_1)_nOR_1$, $-COOCH_2CHOHCH_2OH$, $-CONH-E_2-SO_3Me$ ou $-CON(E_1OH)_2$,

$T_2$ est $-OH$, $-OE_2OR_1$, $-(OE_1)_nOR_1$, $-SO_3Me$, $-C_6H_4SO_3Me$,

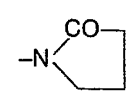 ,

halogénure de pyridinium, $-NHCOR_1$ ou $-NH_2$,

$T_3$ et $T_4$ indépendamment l'un de l'autre sont $-COOMe$, $-CONH_2$, $-CO(OE_1)_nOR_1$, $-CONH-E_1-OH$ ou $-CON(E_1-OH)_2$,

$R_1$ est un atome d'hydrogène ou le groupe méthyle,

$R_2$, $R_3$ et $R_4$ indépendamment les uns des autres sont des groupes alkyle ayant 1 à 6 atomes de carbone;

$E_1$ est un groupe alkylène ayant 2 ou 3 atomes de carbone,

$E_2$ est un groupe alkylène ayant 2 à 6 atomes de carbone,

Me est un atome d'hydrogène ou de métal alcalin,

X est halogénure, et

n vaut 1 à 20, et $-[M_2]-$ est

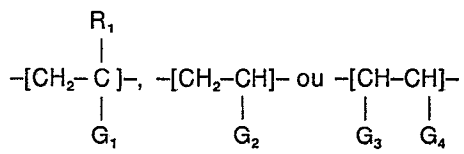

dans laquelle,

$G_1$ est $-COOR_5$, $-OCOR_2$, $-CN$, $-OR_5$, $-C_6H_5$ ou $-C_6H_4X$,

$G_2$ est un atome d'hydrogène, $R_2$ ou un halogénure, et

$G_3$ et $G_4$ indépendamment l'un de l'autre sont $-COOR_5$ ou forment ensemble $-CO-O-CO-$

$R_1$, $R_2$ et X ont les significations données cidessus, et

$R_5$ est un groupe alkyle ayant 1 à 18 atomes de carbone ou cycloalkyle, aryle ou alcényle ayant 6 à 18 atomes de carbone, la somme de x et y valant de 4 jusqu'à 500, et $\frac{x}{x+y}$ étant compris entre 0,5 et 1.

5. Oligomères selon la revendication 1, ayant la formule

(4) 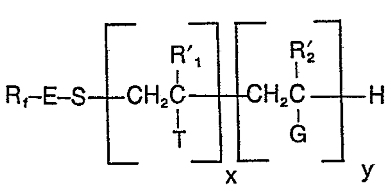

dans laquelle $R_f$ est un groupe perfluoroalkyle à chaîne droite ou ramifiée ayant 6 à 14 atomes de carbone, E est $-CH_2CH_2-$; $R'_1$ et $R'_2$ indépendamment l'un de l'autre sont des atomes d'hydrogène ou des groupes méthyle, et

T et G indépendamment l'un de l'autre sont chacun $-CONH_2$, $-COOH$,

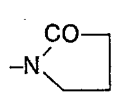 , 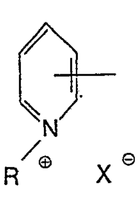

$-COO-E'_1-OH$, $-CONH-E'_1-SO_3H$, $-CONH-CH_2OR'_7$, $-COOCH_2CHOHCH_2{}^{\oplus}NR'_4R'_5R'_6X^{\ominus}$ et $-CONHE'_1NR'_4R'_5$ R étant un groupe méthyle ou éthyle; X étant un groupe chlorure ou bromure; $E'_1$ étant un groupe alkylène à chaîne droite ou ramifiée ayant 1 à 3 atomes de carbone; $R'_4$, $R'_5$ et $R'_6$ indépendamment l'un de l'autre étant des groupes alkyle ayant 1 à 4 atomes de carbone, et $R'_7$ est un atome d'hydrogène ou un groupe alkyle ayant 1 à 4 atomes de carbone, avec $x+y = 5$ à 500.

6. Oligomères selon la revendication 4, ayant la formule $R_f-E-[M]-_xH$, caractérisés par le fait que $R_f$ est un goupe perfluoroalkyle à chaîne droite ou ramifiée ayant 6 à 14 atomes de carbone; E est un groupe éthylène et $-[M_1]-$ est

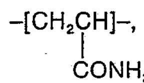, 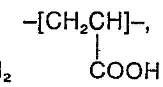, 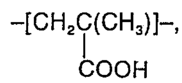,

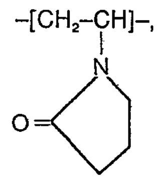, 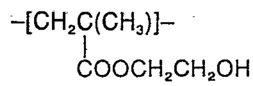

et/ou 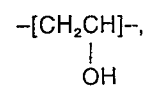,

et x vaut 5 à 250.

7. Oligomères selon la revendication 6, caractérisés par le fait que $R_f$ est un groupe perfluoroalkyle ayant 6 à 12 atomes de carbone.

8. Oligomères selon la revendication 4, caractérisés par le fait que $x+y$ vaut 10 à 200.

9. Oligomères selon la revendication 6, caractérisés par le fait que $x+y$ vaut 10 à 200.

10. Oligomères selon la revendication 9, caractérisés par le fait que $x+y$ vaut 15 à 50.

11. Oligomères selon la revendication 6, caractérisés par le fait que $R_f$ est un groupe perfluoroalkyle à chaîne droite ayant 6 à 12 atomes de carbone; E est un groupe éthylène; $-[M_1]-$ est

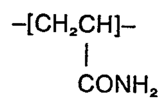

et x vaut 5 à 100.

12. Procédé pour la préparation des oligomères selon la revendication 1, caractérisé par le fait qu'on polymérise un ou plusieurs monomères hydrophiles du type $M_1$, éventuellement avec un ou plusieurs monomères du type $M_2$, en présence d'un $R_f$-mercaptan de formule $R_f-E-SH$, où $R_f$ et E ont les significations données dans la revendication 1.

13. Procédé selon la revendication 12, caractérisé par le fait que la polymérisation s'effectue dans un milieu réactionnel absolument anhydre à des températures comprises entre 20 et 100 °C.

14. Procédé selon l'une des revendications 12 et 13, caractérisé par le fait que la polymérisation s'effectue en présence de 0,001 à 0,5% en poids par rapport au monomère d'un initiateur de radicaux.

15. Utilisation des oligomères selon l'une des revendications 1 à 11 pour abaisser la tension superficielle de systèmes aqueux ou comme additifs pour des compositions extinctrices du type mousses à base de protéines.

16. Concentrés d'hydrolysat de protéine, moussants, aqueux pour former une mousse extinctrice après dilution avec de l'eau d'environ 15 à 35 fois leur volume, caractérisés par le fait qu'ils contiennent une solution aqueuse d'hydrolysat de protéine, qui contient suffisamment d'hydrolysat de protéine pour stabiliser presque complètement la mousse formée après la dilution, et un oligomère selon l'une des revendications 1 à 11 à l'état dissous ou dispersé en une concentration telle que, après dilution, on obtient une teneur d'environ 0,003 à environ 0,3% de cet oligomère.

17. Procédé pour éteindre un liquide hydrophobe brûlant dans une citerne de stockage ou un réservoir, caractérisé par le fait qu'on introduit sous la surface du liquide en train de brûler une mousse aqueuse qui monte ensuite vers la surface de ce liquide, cette mousse étant préparée à partir d'une solution aqueuse d'hydrolysat de protéine qui est à une concentration suffisante pour stabiliser presque complètement la mousse, et que cette solution aqueuse contient en outre 0,003 à 0,3% en poids d'un oligomère selon l'une des revendications 1 à 11.

18. Procédé selon la revendication 17, caractérisé par le fait que, pour éteindre le feu, on applique une matière extinctrice pulvérulente sur la matière combustible puis qu'on applique sur la surface de la matière combustible une mousse aqueuse préparée à partir d'une solution aqueuse d'hydrolysat de protéine pour empêcher que cette matière s'enflamme de nouveau sur les surfaces chaudes, la solution aqueuse d'hydrolysat de protéine étant utilisée en une quantité suffisante pour stabiliser presque complètement la mousse et cette solution aqueuse contenant en outre environ 0,003 à 0,3% en poids d'un oligomère selon l'une des revendications 1 à 11.